# EUROPÄISCHE PATENTSCHRIFT

(11) **EP 2 835 613 B1**
(45) Veröffentlichungstag und Bekanntmachung des Hinweises auf die Patenterteilung: **16.01.2019**
(21) Anmeldenummer: 13179725.0
(22) Anmeldetag: 08.08.2013
(51) Int. Cl.: G01C 1/04, G01C 15/00

(54) **Geodätisches Vermessungsgerät mit Mikrolinsenarray**
Geodesic measuring device with a microlens array
Appareil de mesure géodésique avec tableau de microlentilles

(43) Veröffentlichungstag der Anmeldung: 11.02.2015
(73) Patentinhaber: Hexagon Technology Center GmbH, 9435 Heerbrugg (CH)
(72) Erfinder: Hinderling, Jürg, CH-9437 Marbach (CH); Metzler, Bernhard, A-6850 Dornbirn (AT)
(74) Vertreter: Kaminski Harmann

(56) Entgegenhaltungen:
- EP-A1- 1 681 533
- EP-A1- 2 405 236
- WO-A1-2015/006526
- DE-A1-102009 031 562
- DE-C1- 19 504 039
- US-A- 5 076 687
- US-A1- 2012 327 259

## Beschreibung

Die Erfindung betrifft ein geodätisches Vermessungsgerät zur Vermessung eines Zielpunkts nach dem Oberbegriff des Anspruchs 1 und ein erfindungsgemässes Verfahren für ein solches Vermessungsgerät nach Anspruch 11 sowie ein Computerprogrammprodukt nach Anspruch 15.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts (Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in den Veröffentlichungsschriften EP 1 081 459 oder EP 1 662 278 gezeigt.

Aufgrund des meist sowohl als Sichtkanal als auch für Messungen gemeinsam zu nutzenden Strahlengangs erfordern solche Geräte dessen technische Auslegung in der Bauweise eines Teleskops mit spezialisierten, hochpräzisen und aufwändig herzustellenden Optiken. Des Weiteren sind für die koaxiale elektronische Distanzmessung ein zusätzlicher separater Sende- und Empfangskanal sowie eine zusätzliche Bildebene für die Wellenlänge des Distanzmessers vorgesehen.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge genügend präzise angezielt werden können (d.h. nicht geodätische Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, die optische Strahlung mit einer Wellenlänge im Bereich von 850 nm emittiert - und ein spezieller, für diese Wellenlänge sensitiver ATR-Detektor (z.B. CCD-Flächensensor) zusätzlich im Teleskop integriert.

Im Rahmen der ATR-Feinanzielfunktion wird dabei in Richtung der optischen Zielachse der Visiereinrichtung der ATR-Messstrahl emittiert, dieser wird am Prisma retroreflektiert und der reflektierte Strahl vom ATR-Sensor erfasst. Je nach Abweichung der Ausrichtung der optischen Zielachse vom Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt nicht im Zentrum des ATR-Flächensensors und trifft somit nicht auf einer SollPosition auf, die z.B. anhand Kalibrierung als jene mit der optischen Zielachse korrespondierende Position festgelegt wurde).

Ist dies der Fall, so wird motorisiert die Ausrichtung der Visiereinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der SollPosition auf dem ATR-Flächensensor zusammenfällt). Alternativ kann eine Rest-Abweichung zwischen Auftreffpunkt des retro-reflektierten ATR-Messstrahls auf dem ATR-Flächensensor und dem Zentrum der Sensorfläche auch rechnerisch berücksichtigt und in einen Winkel umgewandelt werden, der zu dem - anhand der Winkelsensoren erfassten - Raumwinkel, in den die Zielachse zeigt, entsprechend addiert wird. D.h., der Raum-Winkel zum Zielpunkt kann in diesem Fall auch abgeleitet werden aus dem - anhand der Winkelsensoren erfassten - Raumwinkel der Zielachse und einer Ablage des detektierten ATR-Messstrahl-Reflexes vom Sensorzentrum (d.h. von jenem zentralen Punkt auf dem ATR-Sensor, an dem die Zielachse abgebildet wird).

Dadurch kann die erzielbare Genauigkeit bei der Ausrichtung der optischen Zielachse auf das Prisma gegenüber einer manuell erfolgenden Anzielung mit Fadenkreuz und basierend auf blossem Augenmass deutlich erhöht werden. Zur Sicherstellung des Funktionierens der automatischen Anzielung basierend auf Auswertung der Position des Reflexflecks des am Prisma retro-reflektierten ATR-Messstrahls auf dem ATR-Flächensensor ist es erforderlich, vor Funktionsstart die Visiereinrichtung zumindest derart ungefähr auf den Ziel-Reflektor auszurichten, dass der retro-reflektierte ATR-Messstrahl auch auf dem ATR-Flächensensor auftrifft. Dafür kann z.B. zuvor eine manuelle Anzielung des Ziel-Reflektors basierend auf Augenmass erfolgen oder eine automatische Grobanzielfunktion ausgeführt werden.

Das manuelle, grobe Anvisieren des Zielobjekts kann benutzerseitig zum einen erfolgen, indem das Zielobjekt auf einem Benutzerdisplay der Anzeige-Steuereinheit direkt am Vermessungsgerät oder auf dem Display eines separaten Peripheriegerätes (z.B. Datenlogger als Fernsteuerung) betrachtet und angezielt wird. Oft erfolgt dies jedoch nach wie vor mittels Betrachten des Ziels durch das Okular des Zielfernrohrs (d.h. der Visiereinrichtung), da im praktischen Einsatz - z.B. bei Sonneneinstrahlung - ein angezeigtes Display-Bild auf der Anzeige-Steuereinheit bzw. dem Datenlogger ungenügend erkennbar sein kann.

Des Weiteren sind aus dem Stand der Technik Verfahren bekannt, wobei mithilfe eines Bildes und Bildverarbeitung (insbesondere anhand einer im aufgenommenen Bild bestimmten Position eines Ziel-Objekts und abhängig von einer bekannten oder dabei erfassten Bildaufnahmerichtung) die Raumwinkel vom Messgerät zum Ziel-Objekt ermittelt werden. Derartige Verfahren sind z.B. in der WO 2005/026767 oder in der WO 2006/053837 beschrieben.

Sowohl bei einer manuellen wie auch bei einer bildbasierten automatischen Feinausrichtung eines Vermessungsgeräts auf ein Ziel besteht aufgrund der typischen Ausführungen der Anzieleinheit mit einer Fokussierlinsengruppe, deren Aufbaus sehr präzise und robust und deren Position in Abhängigkeit einer vorliegenden Entfernung zu einem anzuzielenden Ziel eingestellt werden muss, um eine deutliche und scharfe Abbildung ohne Abbildungsfehler des Ziels zu erhalten, ein Nachteil.

Für eine genaue und verlässliche Anzielung des Ziels muss hierzu genau auf dasjenige Objekt fokussiert werden, welches tatsächlich angezielt wird. Befindet sich z.B. ein Hindernis (z.B. ein Ast eines Baumes) direkt in der Messachse, wobei dieses Hindernis in einer deutlich anderen Entfernung als das Ziel platziert ist, und wird das Ziel zur Anzielung fokussiert dargestellt, so wird gegebenenfalls eine Entfernung zu dem Hindernis nicht aber zu dem Ziel bestimmt. In solchen Fällen ist das Hindernis bei entsprechender Defokussierung - beispielsweise durch den Benutzer des Systems - nicht mehr wahrnehmbar.

Im Falle, dass der Benutzer dabei erkennt, dass die bestimmte Entfernung nicht mit einer tatsächlichen Entfernung zum Ziel übereinstimmen kann, ist eine exakte Ausrichtung und erneute Messung mit einem zusätzlichen, deutlich gesteigerten Zeitaufwand verbunden, welcher sich negativ auf die Produktivität auswirkt. Eine Entfernungsmessung nach dem Stand der Technik auf nicht kooperative und weit entfernte Ziele kann dabei mehrere Sekunden dauern.

Die Fokussierung eines anzuzielenden Objekts kann beispielsweise über eine Kontrastmessung erfolgen. Dabei wird das Fokussierglied über den gesamten Fokussierbereich verschoben und gleichzeitig in kurzen Zeitintervallen mit der integrierten Kamera eine Bildsequenz vom Objekt aufgenommen. Aus dieser Bildsequenz wird mittels Bildverarbeitung jenes Bild ermittelt, in welchem das Objekt mit dem höchsten Kontrast abgebildet ist, und das Fokussierglied an die entsprechende Position bewegt. Ein Nachteil dieses Verfahrens sind wiederum die Zeit, die benötigt wird, um das Fokussierglied über den gesamten Bereich zu bewegen und die erst im Anschluss auszuführende Bildauswertung.

Ein weiterer Nachteil ergibt sich in diesem Zusammenhang aus dem strukturellen Aufbau einer Verschiebeeinheit für das Fokussierglied. Insbesondere, koinzidiert bei einem Teleskop die optische Achse des Hauptobjektivs mit der optischen Achse des Fokussierglieds. Jedoch führen Abweichungen, die sich aus Limitationen in der mechanischen Umsetzung ergeben, zu Fehlern in der optischen Abbildung welche die Anzielgenauigkeit negativ beeinflussen können. Einerseits ergeben sich solche Abweichungen aus einer Nicht-Parallelität der mechanischen Führung des Fokussierglieds mit der optischen Achse des Objektivs, andererseits muss für eine schnelle Bewegung des Fokussierglieds ein gewisses Maß an mechanischem Spiel an dieser Führung in Kauf genommen werden.

Geodätische Vermessungsgeräte zur Vermessung eines Zieles sind außerdem aus den Dokumenten EP 2 405 236 und EP 1 681 533, sowie aus dem nachveröffentlichten Dokument WO 2015/006526 bekannt.

Das Dokument DE 195 04 039 offenbart eine Vorrichtung für Nivellierzwecke mit einer Abbildungsoptik, die für unterschiedliche Schärfentiefebereiche in unterschiedliche Pupillenzonen aufgeteilt ist.

Es ist Aufgabe der vorliegenden Erfindung ein geodätisches Vermessungsgerät bereitzustellen, mit welchem ein gewünschtes Ziel weniger aufwändig, schneller, genauer und zuverlässiger anzielbar ist.
Eine weitere Aufgabe der Erfindung ist es, eine verlässliche Übereinstimmung zwischen einer bildhaften Anzeige des Ziels und einer exakten Vermessung genau dieses Ziels bereitzustellen.
Eine weitere Aufgabe ist das Bereitstellen eines entsprechenden Verfahrens für ein geodätisches Vermessungsgerät.
Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.
Die Erfindung betrifft ein geodätisches Vermessungsgerät mit einer Strahlquelle zur Erzeugung von Messstrahlung, einer eine Stehachse definierenden Basis und einer eine Anzieleinheit tragenden und eine Kippachse definierenden Stütze, wobei die Stütze an der Basis und relativ zur Basis um die Stehachse rotierbar angeordnet ist und die Anzieleinheit relativ zur Stütze um die Kippachse drehbar angeordnet ist. Ausserdem weist das geodätische Vermessungsgerät eine Winkel- und
Entfernungsmessfunktionalität, eine Bilderfassungseinheit zur Erfassung von Bildern eines Objekts in einem durch die Bilderfassungseinheit definierten Sichtfeld und eine Steuerungs- und Verarbeitungseinheit auf.
Erfindungsgemäss weist die Bilderfassungseinheit zumindest einen Bildsensor und ein Mikrolinsenarray mit einer Vielzahl von zweidimensional definiert angeordneten diffraktiven und/oder refraktiven optischen Elementen. Dabei sind bei einem Messvorgang mittels des Bildsensors jeweilige durch die diffraktiven bzw. refraktiven optischen Elemente erzeugte und zumindest Teile des Objekts repräsentierende Bildstücke erfassbar und ein die Bildstücke repräsentierender Bilddatensatz ist erzeugbar. Erfindungsgemäss sind die diffraktiven bzw. refraktiven optischen Elemente im Speziellen als einzelne Linsen mit jeweils definierter Brennweite ausgebildet.
Durch eine solche Anordnung kann ein Objekt mehrfach und im Besonderen mit unterschiedlichen Fokussierungen (entsprechend der Brennweiten der Elemente des Linsenarrays) auf den Bildsensor abgebildet werden. Durch die Vorsehung eines solchen Mikrolinsenarrays im optischen System der Bilderfassungseinheit wird eine deutliche Vergrösserung der Schärfentiefe für aufgenommene Bilder bzw. Bildstücke erzielt. Der auf dieser Basis erzeugbare Datensatz enthält somit Bild- und Tiefeninformation über das Objekt. Anhand dieses Datensatzes, können beispielsweise nach der Datenerfassung unterschiedliche Schärfeeinstellungen repräsentierende Bilder des Objektes erzeugt werden, ohne die Notwendigkeit erneut ein Bild mit anderer Fokussierung (Brennweite) - wie bei typischen bilderfassenden Systemen mit einer Fokussieroptik notwendigerweise erforderlich - aufnehmen zu müssen. Dadurch entfällt auch das Erfordernis der Refokussierung zur Erfassung von Objekten in unterschiedlichen Entfernungen.
Generell ergibt sich für einen Benutzer eines erfindungsgemässen Vermessungsgeräts ein grosser Vorteil bezüglich des Anzielens bestimmter Objekte. Durch den grossen Entfernungsbereich in welchem Objekte erfindungsgemäss scharf erfasst und in einem Bild dargestellt werden können ist für den Benutzer ein entsprechend grösserer Entfernungsbereich zugänglich und die darin befindlichen Objekte sind gut erkennbar. Der Benutzer kann somit Objekte in deutlich unterschiedlichen Entfernungen auf einem Display klar erkennen und auf dieser Basis das gewünschte Objekt auswählen und dieses schnell und genau anzielen. Die Bilderfassungseinheit des erfindungsgemässen geodätischen Vermessungsgeräts ist dem Prinzip einer plenoptischen Kamera nachempfunden.
Eine plenoptische Kamera, auch Lichtfeldkamera genannt, bzw. die Bilderfassungseinheit des Vermessungsgeräts erfasst ein 4D-Lichtfeld einer Szene, d.h. im Gegensatz zu einem konventionell erfassten 2D-Bild wird bei einem 4D-Lichtfeld nicht nur eine Position und Intensität eines Lichtstrahls auf dem Bildsensor erfasst, sondern zusätzlich auch die Richtung, aus der dieser Lichtstrahl eingefallen ist (Strahlen im dreidimensionalen Raum können an einer beliebigen Stelle längs einer Ausbreitungsachse (z) durch vier Parameter - Position (x,y) und Richtung (αx,αy) - beschrieben werden). Möglich wird diese Lichtfeldmessung durch ein Gitter aus mehreren Mikrolinsen, welche eine Vielzahl von Pupillen erzeugen und z.B. auf einen CMOS-Sensor an unterschiedliche Positionen im Objektraum abbilden und dadurch sowohl eine Richtungsmessung als auch eine Helligkeitsmessung zulassen. Damit wird das Lichtfeld mit einer durch die Anzahl von Mikrolinsen und Sensorpixeln bestimmten Auflösung erfasst. Die Mikrolinsen sind üblicherweise in Form eines Mikrolinsenarrays angeordnet, welcher sich in einem bestimmten Abstand vor dem Sensor befindet. Um die Rekonstruktion des Objektbildes zu vereinfachen umfasst der Mikrolinsenarray vorzugsweise Linsen mit typisch zwei bis fünf unterschiedlichen Brennweiten. Mit einer derartigen optischen Anordnung vor dem Bildsensor werden mehrere Bilder der Szene entsprechend der Linsenanordnung durch das Gitter und den Sensor erfasst.
Um das Lichtfeld zu erfassen genügt nur eine einzige Brennweite für die optischen Elemente. Beispielsweise werden auch Kameras mit mehreren (drei) unterschiedlichen Brennweiten realisiert, da die Berechnung von scharfen Bildern dadurch vereinfacht möglich ist. Das Bild kann dann durch Bildstücke, welche scharf sind, zu einem Bildbereich zusammengesetzt werden. Dabei wird auf so genanntes "Raytracing" verzichtet, wodurch keine Berechnung der Lichtstrahlen, die sich auf Punkten auf dem Objekt treffen, notwendig ist.
Durch das Linsengitter wird jeder Bildpunkt gebrochen und zu einem Kegel erweitert, der kreisförmig auf die Sensorfläche trifft. Dadurch lässt sich die Richtung bestimmen, aus welcher der Lichtstrahl eingefallen ist: ein senkrecht auftreffender Lichtstrahl trifft auf den Mittelpunkt des Kreises, ein schräg eintreffender trifft weiter am Rand auf. So kann mittels eines Algorithmus (einer Software) die Schärfeebene für ein anzuzeigendes Bild nachträglich neu berechnet bzw. das Bild entsprechend einer definierten Schärfeebene neu berechnet werden und wie bei einem herkömmlichen Objektiv somit der Brennpunkt geändert werden. Die Informationen aus einer Szene werden auf mehreren Bildpunkten des Kamerachips (Bildsensors) abgebildet, damit die Informationen über die Richtung des einfallenden Lichtstrahls ausgewertet werden kann.

Die maximale Schärfentiefe ist dabei sehr hoch, es muss kein Fokussiervorgang abgewartet werden und die Fokusebene eines aufgenommenen Bildes kann nachträglich angepasst werden.

Gemäss einer speziellen erfindungsgemässen Ausführungsform weisen die diffraktiven bzw. refraktiven optischen Elemente mindestens zwei unterschiedliche Brennweiten auf.

Insbesondere sind der Bildsensor und das Mikrolinsenarray derart angeordnet und wirken derart zusammen, dass durch die Anordnung und die Brennweiten der diffraktiven bzw. refraktiven optischen Elemente die erzeugten Bildstücke jeweils zumindest einen Teil des Sichtfelds repräsentieren und mit einem definierten Versatz auf den Bildsensor projizierbar sind, d.h. die durch jeweilige optische Elemente des Linsenarrays erzeugte Bildstücke werden nicht deckungsgleich (überlagert) auf den Sensor abgebildet, sondern jeweils versetzt zueinander. Ein solcher Versatz ist insbesondere auch bei Verwendung eines Linsenarrays mit nur einer Brennweite gegeben.

Insbesondere kann das Mikrolinsenarray erfindungsgemäss in fester Position und Ausrichtung relativ zum Bildsensor angeordnet sein und aus dem Bilddatensatz eine jeweilige Strahleintrittsrichtung für auf den Bildsensor auftreffende Lichtstrahlen ableitbar sein. Gegenüber Bilderfassungseinheiten bzw. Anzieleinheiten des Standes der Technik kann dadurch auf einen Verstellmechanismus verzichtet werden, welcher bei einer Verwendung eines optischen Fokussierglieds zur Einstellung einer gewünschten Fokussierung notwendig wäre. Als Folge werden durch die erfindungsgemässe Vorsehung und Anordnung des Mikrolinsenarrays potentielle im Zusammenhang mit einem solchen Fokussierglied auftretende Fehlerquellen hinsichtlich der Abbildungsgenauigkeit vermieden.

Ausserdem können erfindungsgemäss die diffraktiven bzw. refraktiven optischen Elemente des Mikrolinsenarrays einer Anzahl von Gruppen zugeordnet sein, wobei die einer Gruppe zugeordneten optischen Elemente jeweils gleiche Brennweiten aufweisen und eine erste Gruppe sich hinsichtlich der Brennweite der zugeordneten optischen Elemente von einer zweiten Gruppe unterscheidet. Beispielsweise kann das Mikrolinsenarray als Linsenraster aus drei unterschiedlichen Linsentypen, die sich in ihrer Brennweite unterscheiden ausgebildet sein.

Das Mikrolinsenarray ist gemäss einer weiteren erfindungsgemässen Ausführungsform derart ausgebildet und angeordnet, dass durch die Gruppen von optischen Elementen Bildstücke von Objekten in unterschiedlichen Objektdistanzen auf eine gemeinsame Bildebene projizierbar sind, wobei der Bildsensor zur Erfassung der in der Bildebene erzeugten Bildstücke angeordnet ist, insbesondere wobei der Bildsensor in der Bildebene angeordnet ist.

Insbesondere kann die Anordnung von Array und Sensor - unabhängig davon ob unterschiedliche Brennweiten der optischen Elemente vorliegen - so gewählt werden, dass jede Mikrolinse 20 bis 40 Bildpunkten auf dem Kamerasensor zugeordnet ist.

Gemäss einer spezifischen Ausführung kann der Sensor für ein gefordertes Auflösungsvermögen pro Mikrolinse mindestens 20 x 20Pixel aufweisen. Insbesondere sind dabei 20 x 20 bis 30 x 30 Pixel pro Mikrolinse vorzusehen und dieser zuzuordnen. Bei z.B. 17 MPx (Megapixel) mit einem Bildformat von 23,6 mm x 15,6 mm ergibt sich bei 25 x 25 Pixel, mit der Voraussetzung ohne Überlappung der Mikrobilder, eine Linsenarraygrösse mit 27200 Einzellinsen (= diffraktive bzw. refraktive optische Elemente). Um eine entsprechend höhere Auflösung mit ausreichender Empfindlichkeit zu erzielen wird vorzugsweise ein Sensor mit Kleinbildformat (36 mm x 24 mm) mit 24 MPx. Bei einer Zuordnung von 28 x 28 Pixeln pro Mikrolinse ist ein Linsenarray mit 30612 Einzellinsen vorgesehen.

Gemäss einer speziellen Ausführungsform der Erfindung weist die Bilderfassungseinheit ein derart angeordnetes Objektiv auf, dass einfallendes Licht aus dem Sichtfeld durch das Objektiv auf das Mikrolinsenarray projiziert wird oder durch das Mikrolinsenarray einfallendes Licht durch das Objektiv auf den Bildsensor projiziert wird. Die Vorsehung und Anordnung von Objektiven bzw. Linsen in der Bilderfassungseinheit hängt dabei im Speziellen davon ab, wie das Mikrolinsenarray und/oder der Bildsensor ausgestaltet sind und zusammenwirken. Kann durch die Vorsehung eines derartigen (speziellen) Arrays, dass die Bildstücke ohne ein zusätzliches Objektiv in geeigneter Weise (mit geeigneten unterschiedlichen Brennweiten) auf den Sensor abbildbar sind, ein Bilddatensatz erzeugt werden, der die erzeugten Bildstücke gemäss den Anforderungen an das Vermessungssystem repräsentiert, so kann beispielsweise auf eine zusätzliche Linse verzichtet werden. Eine solche Anordnung ist beispielsweise für die Erfassung von mikroskopischen Objekten mit kleinem Abstand zum Linsenarray vorteilhaft.

Des Weiteren kann im Zusammenhang mit der vorliegenden Erfindung der Bildsensor erfindungsgemäss mehrere zweidimensional angeordnete Teilsensoren aufweisen, wobei die durch das Mikrolinsenarray erzeugten Bildstücke auf die Teilsensoren projizierbar sind und der Bilddatensatz mittels der mehreren Teilsensoren erzeugbar ist. Dabei können beispielsweise das Linsenarray und die Teilsensoren so angeordnet sein, dass jeweils definierte Einzellinsen des Arrays oder Gruppen von Einzellinsen Bildstücke auf wiederum bestimmte und diesen Einzellinsen bzw. Gruppen zugeordnete Sensoren projizieren und diese Bildstücke dann mittels der jeweiligen Teilsensoren erfasst werden. Eine Zuordnung von Einzellinsen und Teilsensoren kann z.B. gemäss obigen Ausführungen zur Zuordnung mit einem Bildsensor ausgestaltet sein.

Alternativ oder zusätzlich können ein weiterer oder mehrere weitere Bildsensoren, insbesondere wiederum Teilsensoren aufweisende Bildsensoren, vorgesehen sein, beispielsweise um eine Vergrösserung der resultierenden Bildauflösung zu erreichen oder ein grösseres Sichtfeld erfassbar zu machen.

Hinsichtlich der strukturellen Vorsehung der Bilderfassungseinheit an dem geodätischen Vermessungsgerät ist die Bilderfassungseinheit gemäss einer bestimmten erfindungsgemässen Ausführung des Vermessungsgeräts als Übersichtskamera ausgebildet, wobei die Übersichtskamera ein von der Anzieleinheit getrenntes Sichtfeld definiert und getrennt von der Anzieleinheit angeordnet ist.

Alternativ oder zusätzlich hierzu kann die Bilderfassungseinheit im Rahmen einer alternativen erfindungsgemässen Ausführungsform in der Anzieleinheit angeordnet sein, insbesondere derart angeordnet sein, dass das Sichtfeld der Bilderfassungseinheit im Wesentlichen mit dem Sichtfeld eines Teleskops zur Zielanzielung der Anzieleinheit übereinstimmt. Ausserdem kann die Bilderfassungseinheit z.B. in der Stütze des Vermessungsgeräts vorgesehen sein und dadurch jeweils ein Sichtfeld entsprechend der azimuthalen Ausrichtung des Geräts erfasst werden. Eine Anordnung der Bilderfassungseinheit in der Anzieleinheit bzw. derart, dass das mit der Bilderfassungseinheit erfassbare Sichtfeld entsprechend der Ausrichtung der Anzieleinheit eingestellt wird, hingegen stellt eine Erfassung von Bildstücken in dem Sichtfeld gemäss einer aktuellen Ausrichtung - sowohl azimuthal als auch elevativ - der Anzieleinheit bereit.

Die Erfindung betrifft ausserdem ein Verfahren zur Bilderfassung mit einem geodätischen Vermessungsgerät. Das geodätischen Vermessungsgerät umfasst eine Strahlquelle zur Erzeugung von Messstrahlung zur Entfernungsmessung, eine eine Stehachse definierende Basis und eine eine Anzieleinheit tragende und eine Kippachse definierende Stütze, wobei die Stütze an der Basis und relativ zur Basis um die Stehachse rotierbar angeordnet ist und die Anzieleinheit relativ zur Stütze um die Kippachse drehbar angeordnet ist. Zudem verfügt das Vermessungsgerät über eine Winkel- und Entfernungsmessfunktionalität und eine Bilderfassungseinheit zum Erfassen von Bildern eines Objekts in einem durch die Bilderfassungseinheit definierten Sichtfeld.

Erfindungsgemäss erfolgt das Bilderfassen mit zumindest einem gemeinsamen Erzeugen einer Vielzahl von das Objekt jeweils zumindest teilweise, insbesondere mehrfach, abbildenden Bildstücken, insbesondere mit zumindest zwei unterschiedlichen Schärfentiefebereichen, insbesondere Schärfeebenen, und mit einem Erfassen der Bildstücke sowie mit einem Erzeugen eines die Bildstücke repräsentierenden Bilddatensatzes.

Eine derartige Bilderfassung kann beispielsweise mit einem Vermessungsgerät gemäss einer der vorangehend beschriebenen Ausführungsformen der Erfindung erfolgen, wobei das Erzeugen der Vielzahl von Bildstücken mittels des Mikrolinsenarrays erfolgt.

Durch das erfindungsgemässe Bilderfassen werden einzelne Bildstücke eines Objekts erzeugt, welche bei einem Zusammenfügen der Bildstücke das Objekt mit einer bestimmten Brennweite und einer grossen Schärfentiefe abbilden. Dabei wird ein Bilddatensatz erzeugt, der die Bildstücke repräsentiert (im Speziellen bildet jedes Bildstück dabei einen anderen Teil des Objekts ab). Solche Bildstücke werden zudem (gemeinsam, insbesondere gleichzeitig) insbesondere mit mindestens einer weiteren anderen Brennweite (Schärfentiefebereich) erzeugt, so dass das Objekt dann zumindest mit zwei unterschiedlichen Brennweiten abgebildet wird und der Datensatz eine Bildinformation, die die Bildinformation bezüglich den Bildstücken mit beiden Brennweiten repräsentiert, umfasst. Somit werden mit einem einzelnen Erzeugen der Bildstücke bzw. mit einem Erfassen dieser Stücke, Abbildungen des Objekts bzw. ein entsprechender Datensatz erzeugt, der das Objekt mit entweder einem einzelnen oder mindestens zwei unterschiedlichen Schärfetiefenbereichen repräsentiert, d.h. es liegt die Bildinformation entsprechend einem Erfassen des Objekts mit einer oder mindestens zwei unterschiedlichen Brennweiten (mit unterschiedlichen Fokuseinstellungen) vor.

Gemäss einer besonderen Ausführungsform der Erfindung wird aus dem Bilddatensatz eine Abstandsinformation für das Objekt abgeleitet, insbesondere mittels Triangulation, insbesondere für jedes Bildstück, insbesondere wobei eine 3D-Punktwolke erzeugt wird. Hierfür können beispielsweise ein Abstand zwischen zwei Linsenelementen (= diffraktive bzw. refraktive optische Elemente) des Mikrolinsenarrays als Stereobasis und die mit diesen Linsenelementen erzeugten Abbildungen als (Stereo-)Basis für eine stereophotogrammetrische Entfernungsbestimmung herangezogen werden. Jedes Linsenelement (in Verbindung mit dem Bildsensor) kann dabei als einzelne Kamera angesehen werden.

Die grösste erreichbare Stereobasis im Objektraum entspricht damit im Wesentlichen den am weitesten beabstandeten Eintrittspupillen (definiert durch die Linsenelemente), welche durch das vor dem Linsenarray platzierte Objektiv einsehbar sind. Der objektseitige Stereowinkel wird beispielsweise durch die Hauptstrahlen gebildet, welche durch die Mitte der den beiden Mikrolinsen zugeteilten Eintrittspupillen führen.

Somit lässt sich aus den Bilddaten auch Tiefeninformation ermitteln, so dass ein derartiges Verfahren bzw. eine hierzu einsetzbare und z.B. nach dem Prinzip einer plenoptischen Kamera arbeitende Bilderfassungseinheit 3D-Information eines Objekts liefert bzw. auch als 3D-Kamera einsetzbar ist.

Ausserdem kann erfindungsgemäss aus dem Bilddatensatz ein Subbilddatensatz abgeleitet werden, welcher ein Subbild mit zumindest einem fokussiert darstellbaren Bildbereich repräsentiert, wobei Bildelemente innerhalb des zumindest einen Bildbereichs im Wesentlichen basierend auf einem einzelnen Bildstück oder einer definierten Anzahl von Bildstücken aus der Vielzahl gemeinsam erzeugter Bildstücke erzeugt sind, insbesondere basierend auf den unterschiedlichen Schärfentiefebereichen für die Bildstücke. Insbesondere sind die Bildelemente dabei mit einer gemeinsamen Gegenstandsweite erfasst und/oder der Bildbereich wird durch eine Benutzereingabe, insbesondere durch manuelles Auswählen eines Bildpunkts oder grafische Definition eines Bildbereichs, gewählt.

Das Subbild kann somit basierend auf dem Bilddatensatz so erzeugt werden, dass ein gewünschter Bildbereich scharf - im Rahmen des durch die Bildstücke definierten Schärfentiefebereichs - dargestellt wird. So kann beispielsweise ein Bildpunkt oder Bildbereich gewählt werden, der fokussiert dargestellt werden soll, und aus dem Bilddatensatz diejenigen (bei einer Brennweite insbesondere alle) Bildstücke mit dem entsprechenden Schärfentiefenbereich bzw. der entsprechenden Schärfeebene selektiert und angezeigt werden. Hierzu können mittels Bildverarbeitung die Bildstücke hinsichtlich ihres Schärfegrades analysiert und diejenigen identifiziert werden, deren Schärfegrad für den gewählten Bildpunkt oder Bildbereich heranziehbar sind. Soll ein anderer Bildbereich scharf dargestellt werden, so kann der Berechnungsprozess erneut durchgeführt werden und es werden andere hinsichtlich des Schärfentiefebereichs für den anderen Bildbereich geeignete Bildstücke zur Darstellung ausgewählt.
Alternativ können bei einer solchen Auswahl fokussiert anzuzeigender Bildbereiche eine Entfernung zu dem Objekt, welches diesem Punkt bzw. Bereich entspricht, basierend auf dem Datensatz berechnet und Objekte, welche in dieser Entfernung liegen, scharf dargestellt werden.
Somit können mit einem erfindungsgemässen Bilderfassen unterschiedliche Ebenen (bezüglich der Entfernung zur Bilderfassungseinheit) eines Sichtfeldes selektiv scharf dargestellt werden, wobei der angezeigte Sichtbereich (Sichtfeld) konstant bleibt und die unterschiedlichen Bilder jeweils einen gemeinsamen Erfassungszeitpunkt zeigen.
Gemäss einer weiteren erfindungsgemässen Ausführungsform wird aus dem Bilddatensatz ein Scharfbild mit einer, insbesondere entsprechend der unterschiedlichen Schärfentiefebereiche für die Bildstücke, möglichst grossen Schärfentiefe berechnet. Dadurch kann ein Bild erzeugt werden, welches Objekte in unterschiedlichen Entfernungen jeweils gleichzeitig scharf darstellt. Hierfür wird z.B. für alle Bildbereiche bzw. Bildpunkte des darzustellenden Sichtfeldes jeweils dasjenige Bildstück zur Darstellung ausgewählt, welches entsprechend der für den jeweiligen Bildbereich (Bildpunkt) vorliegenden Entfernung eine optimal fokussierte Darstellung des Bereichs aufweist (insbesondere bei unterschiedlichen Brennweiten der optischen Elemente). Dies kann beispielsweise mittels Kontrastanalyse erfolgen. Befinden sich alle im Sichtfeld befindlichen Objekte innerhalb des durch die Bildstücke (bzw. durch die ggf. unterschiedlichen Brennweiten des Mikrolinsenarrays) abgedeckten Schärfentiefebereichs, so kann daraus ein Bild erzeugt werden, welches alle Objekte im Bild scharf darstellt. Gemäß der Erfindung wird ausserdem ein Bild entsprechend einer aktuell gemessenen Entfernung derart aus dem Bilddatensatz erzeugt, dass in der gemessenen Entfernung befindliche Objekte mit einem ersten Schärfegrad im Bild dargestellt werden und Objekte in einer anderen Entfernung mit einem geringeren Schärfegrad dargestellt werden. Dadurch kann beispielsweise genau eine Schärfeebene fokussiert dargestellt werden, wobei andere Schärfeebenen bzw. Schärfentiefebereiche defokussiert dargestellt bleiben. Dies ermöglicht beispielsweise eine verbesserte Abgrenzung von relevanten Objekten relativ zu unwichtigen Objekten im Bild.
Gemäss einer speziellen Ausführungsform eines erfindungsgemässen Vermessungsgeräts ist die Steuerungs- und Verarbeitungseinheit derart ausgebildet, dass ein wie oben beschriebenes, erfindungsgemässes Verfahren damit ausführbar ist.
Die Berechnung eines Bildes oder eine oben angeführte spezielle Berechnung von Daten kann beispielsweise direkt auf dem geodätischen Vermessungsgerät oder - alternativ oder zusätzlich, d.h. dass beispielsweise zumindest Teilberechnungen auf dem Vermessungsgerät erfolgen - auf einer externen Recheneinheit, z.B. einem Feldcontroller oder einem Server (gemäss den Prinzipen des "cloudcomputing"), erfolgen.

Die Erfindung betrifft ausserdem ein Computerprogrammprodukt, das auf einem maschinenlesbaren Träger gespeichert ist, zur Steuerung des Erzeugens der Vielzahl von Bildstücken und des Erfassens der Bildstücke, zur Ausführung des Erzeugens des die Bildstücke repräsentierenden Bilddatensatzes und zur Ausführung des Erzeugens des Bilds entsprechend einer aktuell gemessenen Entfernung aus dem Bilddatensatz des erfindungsgemässen Verfahrens, insbesondere wenn das Computerprogrammprodukt auf der Steuerungs- und Verarbeitungseinheit eines erfindungsgemässen geodätischen Vermessungsgeräts ausgeführt wird.
Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figs. 1a-b: ein geodätisches Vermessungsgerät nach dem Stand der Technik und einen Aufbau einer Anzieleinheit für ein solches Gerät;
- Figs. 2a-b: einen Anzielvorgang für ein gewünschtes Ziel zur Verdeutlichung einer durch eine unzureichende Zielfokussierung verursachten Anzielproblematik;
- Fig. 3: eine erste Ausführungsform einer erfindungsgemässen Anzieleinheit eines geodätischen Vermessungsgeräts;
- Fig. 4: eine zweite Ausführungsform einer erfindungsgemässen Anzieleinheit eines geodätischen Vermessungsgeräts;
- Fig. 5: eine dritte Ausführungsform einer erfindungsgemässen Anzieleinheit eines geodätischen Vermessungsgeräts;
- Fig. 6: eine spezielle erfindungsgemässe Ausführungsform einer Anzieleinheit eines Vermessungsgeräts mit einer Kombination aus zwei Bilderfassungseinheiten;
- Fig. 7: eine weitere spezielle erfindungsgemässe Ausführungsform einer Anzieleinheit mit zwei getrennt angeordneten Bilderfassungseinheiten;
- Fig. 8: eine weitere spezielle erfindungsgemässe Ausführungsform einer Anzieleinheit mit einer ersten und einer zweiten Bilderfassungseinheit;
- Fig. 9: eine erfindungsgemässe Ausführung einer Anzieleinheit mit einem Mikrolinsenarray mit optischen Elementen (Einzellinsen) zweier unterschiedlicher Brennweiten (f₁, f₂) zusammen mit einer Darstellung einer dadurch erzielbaren Schärfentiefe;
- Figs. 10a-b: den erfindungsgemässen Einsatz des plenoptischen Prinzips für ein geodätisches Vermessungsgerät;
- Fig. 11: die erfindungsgemässe Verwendung eines Linsenarrays mit zwei unterschiedlichen Brennweiten; und
- Fig. 12: eine Darstellung der zu erwartenden, mittels Berechnung aus dem plenoptisch erfassten Datensatz, rekonstruierten Bildunschärfe in Funktion der Objektentfernung.

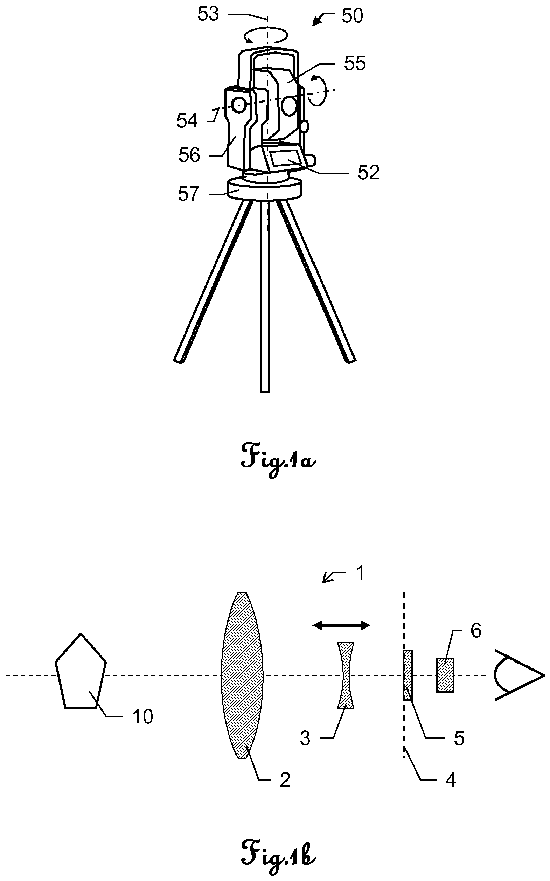

Fig. 1a zeigt ein geodätisches Vermessungsgerät 50 nach dem Stand der Technik, hier eine Totalstation 50, mit einer Anzieleinheit 55, die eine Bilderfassungseinheit (insbesondere Kamera) aufweist, wobei eine Erfassungsrichtung der Bilderfassungseinheit weitestgehend parallel zu einer Messrichtung einer ebenfalls im Vermessungsgerät angeordneten Messeinrichtung vorliegt. Eine optische Erfassungsachse für die integrierte Bilderfassungseinheit läuft somit zumindest parallel, insbesondere koaxial, zu einer durch eine emittierbare Messstrahlung definierte Messachse. Ein Sichtfeld der Bilderfassungseinheit ist durch die in der Anzieleinheit 55 verbaute Optik und das Design der Anzieleinheit 55 definiert, wobei die Messstrahlung ebenfalls durch die Optik austritt und dadurch deren Richtung definiert ist.

Des Weiteren ist das Vermessungsgerät 50 mit einer Ausgabeeinheit 52, insbesondere mit einem Display, versehen, auf der von der Kamera erfasste Bilder dargestellt werden können. Zudem verfügt das Gerät zur Ausrichtung der Messstrahlung bzw. der Erfassungsrichtung auf ein Objekt über zwei senkrecht zueinander stehende Schwenkachsen 53,54 (Stehachse 53 und Kippachse 54). Das Vermessungsgerät 50, bzw. die emittierbare Messstrahlung, kann dadurch mittels Drehung der Anzieleinheit 55 um eine oder beide Achsen 53,54 auf einen zu vermessenden Punkt ausgerichtet werden. Die kann insbesondere motorisiert erfolgen. Hierzu ist die Anzieleinheit 55 in einer Stütze 56 drehbar um die Kippachse 54 gelagert und die Stütze 56 um die Stehachse 53 auf einer Basis 57 drehbar angeordnet.

Beispielhaft ist ein bekannter Aufbau für die Anzieleinheit 55, insbesondere wobei die Anzieleinheit 55 als Teleskop ausgebildet ist, in Fig. 1b gezeigt.

Fig. 1b zeigt einen bekannten Aufbau einer Teleskopvorrichtung 1 bestehend im Wesentlichen aus einem Hauptobjektiv 2 und einem beweglichen Fokussierglied 3, welches abhängig von einem Objektabstand an der vorgesehenen Stelle positioniert zu einer scharfen Abbildung des Objekts 10 in der Bildebene 4 führt. Derartige Vorrichtungen 1 sind insbesondere in geodätischen Vermessungsgeräten 50 gemäss Fig. 1a vorgesehen. In der Bildebene befindet sich eine Strichplatte 5 mit einem Fadenkreuz, welches das Objektbild überlagernd über ein Okular 6 abgebildet wird und dadurch von einem menschlichen Auge wahrgenommen werden kann.

Moderne Totalstationen 50 verfügen hierzu über eine Autofokusfunktionalität, wobei nach dem benutzerseitigen Auslösen eines Messvorgangs automatisch die geeignete Position für das Fokussierglied 3 bestimmt und dieses über Motoren an diese Position verschoben wird.

Dies kann z.B. durch eine Messung der Distanz zum Objekt 10 mit dem eingebauten Entfernungsmesser und einer aus einer Kalibrierung bekannten und auf dem Instrument gespeicherten Tabelle erfolgen, aus der für jede Objektdistanz die korrespondierende Position des Fokussierglieds 3 ableitbar ist. Alternativ oder zusätzlich kann die Fokussierung über eine Kontrastmessung erfolgen. Dabei wird das Fokussierglied 3 über den gesamten Positionierungsbereich verschoben und gleichzeitig mit einer integrierten Kamera eine Bildsequenz vom Objekt 10 aufgenommen. Aus dieser Bildsequenz wird mittels Bildverarbeitung jenes Bild ermittelt, in welchem das Objekt mit der dem höchsten Kontrast abgebildet wird, und das Fokussierglied 3 an die entsprechende Position bewegt.

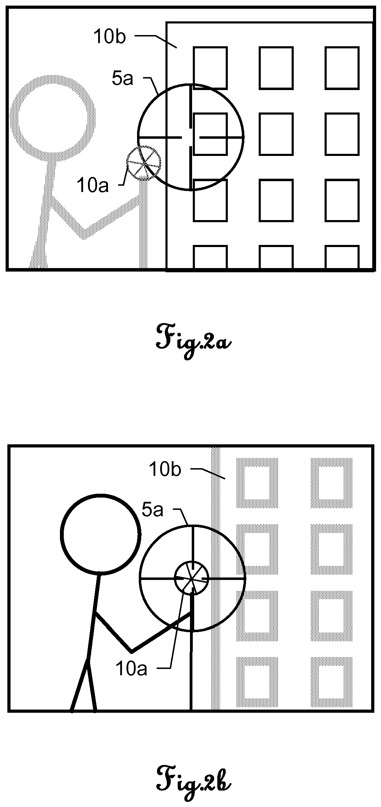

Fig. 2a-b zeigen einen Anzielvorgang für ein Ziel 10a zur Verdeutlichung der durch eine unzureichende Zielfokussierung verursachten Anzielproblematik, wie diese bei Verfahren und mit Geräten des Standes der Technik auftreten kann.

Probleme treten beim Anzielen dann auf, wenn die Anzieleinheit bzw. das Teleskop auf ein Objekt 10b in einer ersten Entfernung, z.B. 200 m, ausgerichtet und der Fokus auf diese Entfernung eingestellt wurde, z.B. durch einen Autofokus, das tatsächlich anzuzielende Objekt 10a sich jedoch in einer zweiten deutlich unterschiedlichen Entfernung, z.B. 10 m befindet (vgl. Fig. 2a). In diesem Fall wird das tatsächlich anzuzielende Objekt 10a aufgrund der Defokussierung sehr unscharf abgebildet. Diese Defokussierung kann derart extrem sein, dass das Objekt 10a vom Benutzer nicht mehr wahrgenommen werden kann bzw. auf einem erfassten Bild nicht mehr dargestellt wird. Für den Benutzer ist es somit schwierig die Anzieleinheit auf das anzuzielende Objekt 10a auszurichten ohne eine zeitaufwändige manuelle Fokussierung auf das Objekt durchzuführen.

Dieser Fall tritt insbesondere dann auf, wenn ein kleines, sich in der Nähe befindliches Objekt 10a, z.B. ein Reflektor, angezielt werden soll. Hier ist die Wahrscheinlichkeit gross, dass dieses Objekt 10a nicht sofort getroffen wird und sich der Autofokus auf ein Objekt 10b im Hintergrund einstellt.

Fig. 2b zeigt eine refokussierte Anzielung des Objekts 10a mittels eines Fadenkreuzes 5a, welches durch eine Strichplatte in der Anzieleinheit überlagert bereitgestellt wird. Hierbei ist auf den Benutzer und den Reflektor 10a fokussiert, so dass diese scharf dargestellt sind, wobei das Objekt 10b defokussiert und unscharf angezeigt wird.

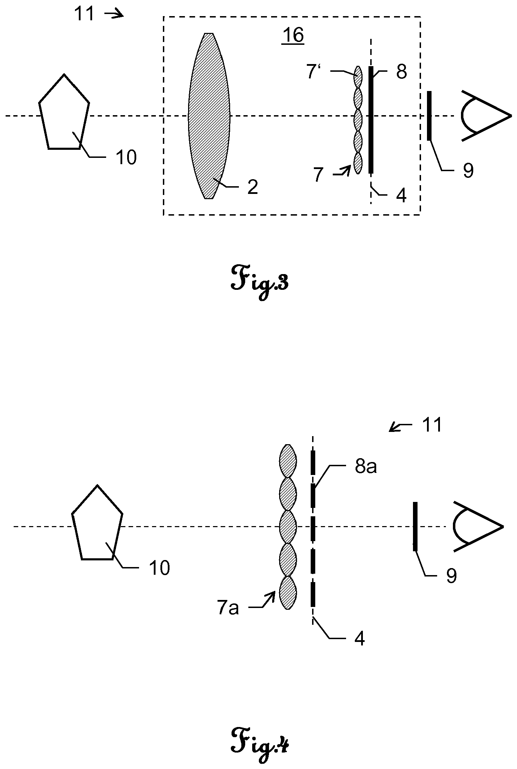

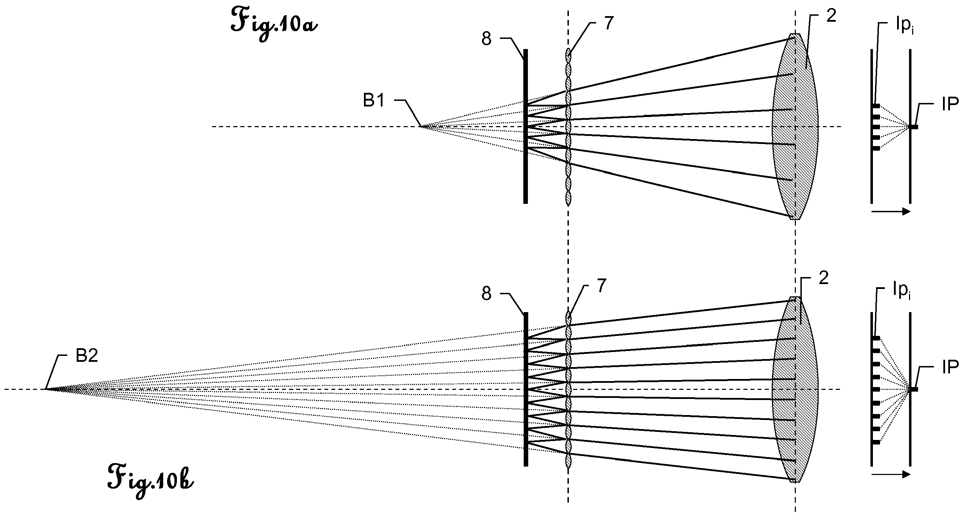

Fig. 3 zeigt eine erste Ausführungsform einer erfindungsgemässen Anzieleinheit 11 eines geodätischen Vermessungsgeräts mit einer Bilderfassungseinheit 16 ohne ein aus dem Stand der Technik bekanntes Fokussierglied. Die Abbildung des Objekts 10 erfolgt hierbei über das Hauptobjektiv 2 und ein Mikrolinsenarray 7 auf einen Bildsensor 8 (in der Bildebene 4). Das Mikrolinsenarray 7 besteht aus einer zweidimensionalen Anordnung von Linsen 7' gleicher Brennweite, im Besonderen unterschiedlicher Brennweiten, welche jeweils ein Bildstück des Objekts 10 auf den Bildsensor 8 abbilden. Bei Linsen 7' unterschiedlicher Brennweite können durch das Mikrolinsenarray 7 insbesondere identische Bildstücke, d.h. Bildstücke, die einen gleichen Ausschnitt eines Sichtfeldes repräsentieren, mit (entsprechend der Linsenkonfiguration) unterschiedlichen Brennweiten mehrfach abgebildet werden. Mittels der Bildsensors 8 wird basierend auf den Abbildungen auf den Sensor 8 ein Bilddatensatz erzeugt, welcher die Bilddaten dieser Abbildungen repräsentiert. Dieses Erzeugen eines entsprechenden Datensatzes erfolgt sowohl für ein Array 7 mit einer als auch mit mehreren unterschiedlichen Brennweiten analog. Für eine detaillierte Beschreibung und Veranschaulichung dieses Abbildens der Vielzahl von Bildstücken und dieses Erzeugens des Datensatzes wird auf die Figuren 10a-b verwiesen.

Der Bilddatensatz umfasst somit Bildinformation mit einer (bei Verwendung von Linsen unterschiedlicher Brennweiten unterschiedlichen) Entfernungs-Fokussierungs-Relation (entsprechend der Brennweiten der Linsen) bezüglich eines Sichtfeldes in welchem die Bilder erfasst wurden. Mittels des Mikrolinsenarrays 7 wird damit das so genannte Lichtfeld erfasst.

Im Speziellen liegt dadurch Bildinformation vor, welche aufgrund der erzielbaren grossen Schärfentiefe zu unterschiedlichen Entfernungen im Sichtfeld jeweils eine fokussierte Darstellung von zumindest einem Teilbereich des Sichtfeldes (d.h. von Objekten 10 in genau einer Entfernung) ableitbar macht. Ausserdem kann auf dieser Basis zu jedem Bildpunkt eine Richtung für das auf den Bildsensor einfallende Licht bestimmt werden.

Aus der Gesamtheit der so erzeugten Bilddaten kann z.B. ein Bild berechnet werden, welches auf eine vorgegebene Objektdistanz fokussiert ist, wobei die Objektdistanz z.B. über den eingebauten Entfernungsmesser ermittelt werden kann. Das aus der Berechnung resultierende Bild kann dann z.B. durch einen EOV 9 (Electro Optical Viewer) dargestellt und dort vom menschlichen Auge betrachtet werden.

Aus den mit dem Bildsensor 8 erfassten Bilddaten kann insbesondere ein Tiefenbild berechnet werden, d.h. für jeden Bildpunkt kann anstelle eines oder zusätzlich zu einem Farb- oder Intensitätswert die entsprechende Entfernung errechnet und gespeichert werden.

Eine solche Berechnung des Tiefenbildes erfolgt prinzipiell über Triangulation. Das Mikrolinsenarray 7 mit dem dahinter liegenden Bildsensor 8 wird dabei als ein Array von einzelnen Kameras betrachtet, welche jeweils ein Bild von einer virtuellen Szene aufnehmen und in ihrer Gesamtheit ein Stereokamerasystem bilden. Durch den Abstand der Linsen des Mikrolinsenarrays 7 werden die jeweiligen zur Entfernungsberechnung erforderlichen Stereobasen definiert.

Bei gegebener Tiefeninformation kann nun für jeden abzubildenden Bildpunkt der Fokuspunkt entsprechend der Entfernung individuell gesetzt werden und aus der Gesamtheit der aufgenommenen Bildinformation ein Bild berechnet werden, in welchem jeder Bildpunkt (im Rahmen der durch die ggf. unterschiedlichen Brennweiten der Linsen 7' bereitgestellten Gegenstandsweiten) scharf abgebildet wird. Dies erlaubt eine Darstellung einer Szene mit grosser Schärfentiefe, d.h. sowohl Objekte in geringer als auch in grösserer Entfernung zur Anzieleinheit 11 werden gleichzeitig scharf in dem erzeugbaren Bild dargestellt. Erfindungsgemäss wird dies generell ermöglicht durch die deutlich gesteigerte Schärfentiefe, die durch die Anordnung des Linsenarrays 7 bewirkt wird.

Des Weiteren kann eine Berechnung einer Entfernung zu einem Objekt oder eines Entfernungsprofils (z.B. für das gesamte Bild) im Speziellen basierend auf Schärfeunterschieden im Bild berechnet werden. Eine solche Berechnung kann alternativ auch bereits basierend auf dem Bilddatensatz erfolgen. Hierzu ist zumindest eine grobe Kenntnis über den durch das Mikrolinsenarray 7 (zusammen mit dem optischem System der Bilderfassungseinheit 16) erzielbaren Schärfebereich vorausgesetzt und eine entsprechende Information vorzugsweise im System hinterlegt.

Insbesondere kann ausserdem mit dem in dem geodätischen Vermessungsgerät verbauten Distanzmesser eine Objektdistanz ermittelt werden und aus dem erzeugten Bilddatensatz dann ein Bild so berechnet werden, dass Objekte in der entsprechend ermittelten Distanz in dem Bild scharf abgebildet sind. Fig. 4 zeigt eine zweite Ausführungsform einer erfindungsgemässen Anzieleinheit 11 bzw. einer Bilderfassungseinheit in der Anzieleinheit 11. Die Bilderfassungseinheit weist hier wiederum ein Mikrolinsenarray 7a auf, wobei zudem eine Mehrzahl von Teilbildsensoren 8a (z.B. als Teil eines diese Teilbildsensoren 8a umfassenden Bildsensors) derart angeordnet ist, dass die durch das Mikrolinsenarray 7a erzeugten Abbildungen des Objekts 10 bzw. von mehreren Objekten aus dem gemeinsamen Sichtfeld durch diese Sensoren 8a erfassbar sind und dadurch ein Gesamtdatensatz erzeugbar ist. Der Datensatz umfasst dann Bildinformationen gemäss der Gesamtheit der durch die Linsen des Arrays 7a erzeugten Bildstücke. Zudem ist eine elektrooptische Anzeigeeinheit 9 zur Anzeige von aus dem Datensatz erzeugbaren Bildern vorgesehen.

Durch die spezielle Ausgestaltung des Mikrolinsenarrays 7a und die Anordnung der mehreren Bildsensoren 8a derart, dass z.B. jeder Linse des Arrays 7a ein bestimmte Anzahl und Anordnung von Sensoren 8a zugeordnet ist, kann gemäss dieser Ausführungsform auf ein Hauptobjektiv - wie in Fig. 3 gezeigt - verzichtet werden, wobei die vergrösserte Schärfentiefe dennoch erzielt wird.

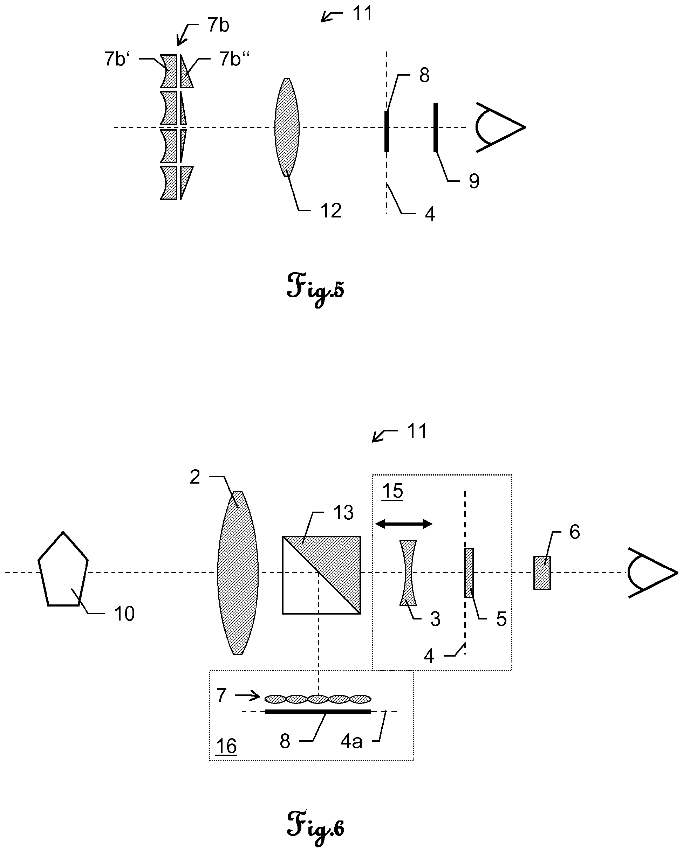

Fig. 5 zeigt eine dritte Ausführungsform für eine erfindungsgemässe Anzieleinheit 11 mit einem zweiteilig aufgebauten Mikrolinsenarray 7b, einer Linse 12, einem Bildsensor 8 und einer elektrooptischen Anzeigeeinrichtung 9. Das Mikrolinsenarray 7b ist hierbei derart konstruiert, dass einfallendes Licht durch das Array 7b jeweils an einer ersten Komponente 7b' (z.B. konkav-plane Linse) gebrochen und optisch verkleinert wird und durch eine zweite Komponente 7b" (z.B. Prisma) der Hauptstrahl in Richtung Linse 12 gelenkt wird.
Durch das Array 7b wird das Lichtbündel auf die Linse 12 gerichtet und dann wiederum auf dem Bildsensor 8 abgebildet. Auf dieser Basis kann ein Rohbilddatensatz erzeugt werden, welcher Bildinformation, insbesondere auch Richtungsinformation, von allen durch das Linsenarray 7b erzeugten Bildstücken enthält.
Diese zur Fig. 3 inverse Anordnung der abbildenden Elemente hat den Vorteil, dass der Bildsensor mit Hilfe der Linse 12 der lateralen Ausdehnung des Arrays angepasst, beispielsweise vergrössert werden kann.
Fig. 6 zeigt eine spezielle erfindungsgemässe Ausführungsform einer Anzieleinheit 11 eines Vermessungsgeräts mit einer ersten Bilderfassungseinheit 15 und einer zweiten erfindungsgemässen Bilderfassungseinheit 16. Die Anzieleinheit 11 weist einen Strahlteiler 13 zur Bereitstellung von einfallender Lichtstrahlung sowohl für die erste als auch für die zweite Bilderfassungseinheit 16 auf.

Die erste Bilderfassungseinheit 15 ist entsprechend einer dem Stand der Technik entsprechenden Ausführung einer Bilderfassungseinheit 15 ausgeführt (vgl. Fig. 1b), wobei das erzeugte Bild mittels eines Okulars 6 von einem Benutzer betrachtet werden kann. Zur variablen Fokussierung ist hierbei ein veränderlich positionierbares Fokussierglied 3 vorgesehen. Die Strichplatte 5 ist in einer ersten Bildebene 4 angeordnet.

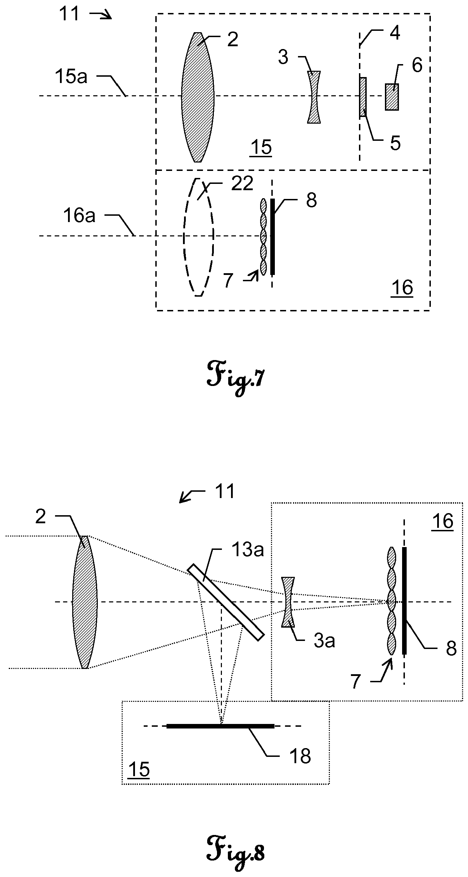

Die zweite Bilderfassungseinheit 16 weist ein Mikrolinsenarray 7 und einen Bildsensor 8 auf, wobei der Bildsensor in einer durch das Hauptobjektiv 2 und den Strahlteiler 13 definierten zweiten Bildebene 4a angeordnet ist. Mittels der Strahlumlenkung durch den Strahlteiler 13 kann mit der zweiten Bilderfassungseinheit 16 ein Bilddatensatz erzeugt werden, dessen umfasste Bildinformation die Daten einer Anzahl von den den Linsen des Arrays 7 entsprechenden Bildstücken enthält. Generell kann somit Information entsprechend der im Zusammenhang mit Fig. 3-5 beschriebenen Ausführungsformen generiert werden. Fig. 7 zeigt eine weitere erfindungsgemässe Ausführungsform einer Anzieleinheit für ein geodätisches Vermessungsgerät, wobei eine erste optische Erfassungsachse 15a durch eine erste Bilderfassungseinheit 15 und eine zweite optische Erfassungsachse 16a durch eine zweite Bilderfassungseinheit 16 definiert ist. Im Besonderen sind diese Achsen 15a,16a parallel zueinander angeordnet, können jedoch gemäss einer alternativen Ausführung (nicht gezeigt) gewinkelt zueinander ausgerichtet sein.
Die erste Bilderfassungseinheit 15 entspricht hier einer Ausführung gemäss Fig. 1b. Die zweite Bilderfassungseinheit 16 entspricht dem Prinzip gemäss Fig. 3, wobei keine elektrooptische Anzeigevorrichtung vorgesehen ist und die mittels des Bildsensors erfassten Bilder bzw. die erzeugten Daten an eine Anzeigeeinheit bzw. eine Verarbeitungseinheit übertragen werden. Solche Verarbeitungseinheiten können beispielsweise an dem geodätischen Vermessungsgerät angeordnet oder an einer Fernsteuereinheit vorgesehen sein. Die zweite Bilderfassungseinheit 16 kann gemäss dieser Ausführungsform z.B. als Übersichtskamera an einer Totalstation vorgesehen sein.

Ferner kann in alternativen Ausführungsformen die zweite Bilderfassungseinheit 16 nach einer Ausführung gemäss einer der Figuren 4 oder 5 ausgebildet sein. Insbesondere kann dabei auf das dem Mikrolinsenarray 7 vorgelagerte Objektiv 22 der zweiten Bilderfassungseinheit 16 verzichtet werden.

Ein so erzeugbares Übersichtsbild kann an einem Touch-Display dargestellt werden und darauf mit einem Stift auf ein gezeigtes Objekt getippt werden. Aus den erzeugten Bilddaten kann dann die Tiefe bzw. Entfernung für das angewählte Objekt abgeleitet werden und darauf basierend das Fokussierglied 3 der Messkamera (erste Bilderfassungseinheit 15) an die entsprechende Fokusposition gefahren (Autofokus). Dadurch wird die Messkamera auf das Objekt fokussiert. Zusätzlich kann das Zentrum der Messkamera (Fadenkreuz) motorisiert auf das Objekt ausgerichtet werden.

Fig. 8 zeigt eine weitere spezielle erfindungsgemässe Ausführungsform einer Anzieleinheit 11 mit einer ersten und einer zweiten Bilderfassungseinheit 15,16. Hinter dem gemeinsamen Objektiv 2 wird der Strahlengang mittels eines Strahlteilers 13a aufgeteilt. Im ersten Kanal wird die Intensität des Lichtfeldes mit einem ersten Bildsensor 18 erfasst. Im zweiten Kanal wird die Beleuchtung des Linsenarrays 7 durch eine optische Vergrösserung bzw. Verkleinerung (durch das Element 3a) der optischen Beleuchtung des ersten Bildsensors 18 geeignet angepasst und mit einem zweiten Bildsensor 8 eine plenoptische Erfassung des Lichtfeldes realisiert. Eine besondere Ausführungsform von Abbildungsmassstab und Brennweitenaufteilung ist beispielsweise Folgende: Der Abstand zwischen dem Array 7 und dem Sensor 8 entspricht dabei der Brennweite der Linsen des Arrays 7, d.h. die Brennpunkte der Einzellinsen liegen auf der Detektionsfläche des Sensors 8.

Das Linsenarray 7 und der erste Sensor 18 sind dabei derselben Objektdistanz (im Objektraum) zugeordnet.

Durch die Wahl der Nachvergrösserungsoptik 3a kann das Grössenverhältnis zwischen Array 7 und Sensor 18 definiert eingestellt werden, beispielsweise um die Auflösung in einem vorbestimmten Entfernungsbereich zu erhöhen. Hierbei können Nachvergrösserungsoptik 3a, Array 7 und Sensor 18 derart ausgebildet sein, dass bei niedriger Auflösung jeder Arraylinse genau ein Pixel und bei erhöhter Auflösung genau n * n Pixel des Sensors 18 zugeordnet sind.

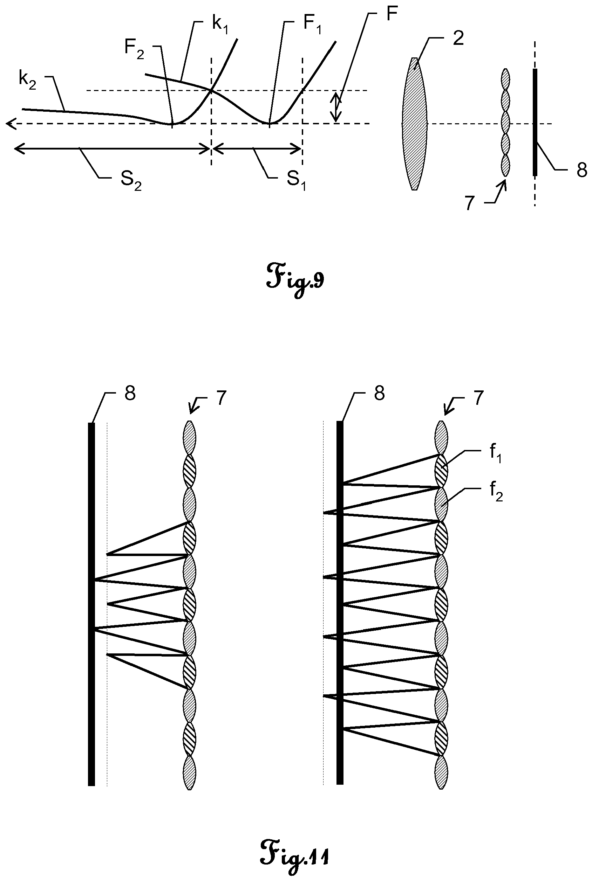

Fig. 9 zeigt eine beispielhafte erfindungsgemässe Ausführung einer Anzieleinheit mit einem Mikrolinsenarray 7 mit optischen Elementen (Einzellinsen) zweier Brennweiten (f₁, f₂) und einem CMOS 8 zusammen mit einer Darstellung bezüglich dadurch erfassbarer Schärfetiefenbereiche S₁, S₂. Der erste Schärfentiefebereich S₁ entspricht einem Entfernungsbereich, innerhalb dem dieses Objekt als scharf (fokussiert) dargestellt betrachtet wird (= Schärfebereich F), d.h. wenn das Objekt in diesem ersten Entfernungsbereich vorliegt wird es durch eine Abbildung der Einzellinsen mit der Brennweite f₁ scharf auf den Sensor 8 abgebildet und erfasst. Analoges gilt für die Abbildung bezüglich des zweiten Schärfentiefebereichs S₂ mit den Einzellinsen der Brennweite f₂ und einem damit verbundenen zweiten Entfernungsbereich. Beispielsweise werden Objekte in einer Entfernung zwischen 2 m und 10 m durch die Linsen mit der Brennweite f₁ scharf abgebildet (wobei die optimale Fokussierung für f₁ z.B. in einem Abstand F₁ von 4 m vorliegt) und Objekte, die weiter als 10 m entfernt liegen durch die Linsengruppe der Brennweite f₂ scharf abgebildet (wobei die optimale Fokussierung für f₂ z.B. in einem Abstand F₂ von 13 m vorliegt). Die beiden Kurven k₁ und k₂ repräsentieren hierbei schematisch die Veränderung eines Punktbildradius eines abgebildeten Objektpunkts in Abhängigkeit der Distanz zwischen Array 7 und dem zu erfassenden Objektpunkt.

Durch ein derartiges Array 7 mit solchen Linsen unterschiedlicher Brennweiten f₁, f₂ kann der gesamte Schärfentiefenbereich (Objektraum) entsprechend ausgedehnt gestaltet werden und damit eine entsprechend grosse Schärfentiefe erreicht werden. Eine detaillierte Darstellung der Abbildungseigenschaften wird auf Fig. 11 verwiesen.

Figs. 10a-b zeigen den erfindungsgemässen Einsatz des plenoptischen Prinzips für ein geodätisches Vermessungsgerät mit einem Linsenarray 7 mit optischen Elementen einer Brennweite.

Zwei Objektpunkte (nicht dargestellt) liegen auf der optischen Achse in unterschiedlichen Entfernungen. Über das Hauptobjektiv 2 würden die Lichtstrahlen des weiter entfernten Punkt auf B1 und die des näheren Punktes auf B2 fokussiert. Um eine scharfe Abbildung zu erhalten müssten nun der Bildsensor 8 an die entsprechende Position B1 oder B2 verschoben werden. Dann würden die Lichtstrahlen vom jeweiligen Objektpunkt auf genau ein Pixel auf dem Sensor 8 fokussiert, z.B. in diesem Fall auf das Pixel, welches dem Bildhauptpunkt entspricht, da die beiden Objektpunkte auf der optischen Achse liegen. Im Gegensatz dazu werden nun nach dem plenoptischen Prinzip die Lichtstrahlen von einem Objektpunkt über das Mikrolinsenarray 7 auf verschiedene Pixel des Sensors 8 abgebildet - diese sind hier für den nahen und den weiter entfernten Punkt unterschiedlich. Durch gemeinsames Betrachten bzw. Verarbeiten (Akkumulieren) dieser Pixel kann beispielsweise der Intensitätswert für den Objektpunkt am Bildsensor 8 berechnet werden. Dabei werden je nach Entfernung des abgebildeten Objekts andere und unterschiedliche viele Pixel für die Berechnung herangezogen.

Auf der rechten Seite der Figuren 10a-b ist dieses "Akkumulieren" jeweils rein schematisch anhand eines virtuellen Querschnitts dargestellt. Die auf einzelne Pixel verteilte Information bezüglich des einen abgebildeten Objektpunkts wird dabei zu einer Gesamtinformation für den Objektpunkt zusammengefügt (dargestellt durch die jeweiligen Pfeile). Die Informationen einzelner Pixel bzw. Pixelgruppe Ipᵢ werden also zu einer Pixelinformation IP vereint.

Fig. 11 zeigt das Prinzip bei erfindungsgemässer Verwendung eines Linsenarrays 7 mit zwei unterschiedlichen Brennweiten - eine geringere Brennweite f₁ für Objekte in Entfernungen von beispielsweise 2 m bis 20 m und eine grössere Brennweite f₂ für Objekte in Entfernungen von beispielsweise 20 m bis unendlich. In der linken Darstellung wird die Abbildung eines weiter entfernten Objektpunkts und rechts die eines näheren Objektpunkts gezeigt (prinzipiell entsprechend den Figuren 10a-b). Für den weiter entfernten Objektpunkt werden nur jene Pixel in der Berechnung berücksichtigt, die über die grössere Brennweite f₂ scharf auf dem Bildsensor abgebildet werden, für den näher gelegenen Punkt nur diejenigen, die über die geringere Brennweite f₁ scharf auf dem Bildsensor abgebildet werden.

Grundsätzlich ist es möglich anhand der gemessenen Lichtfelddaten räumlich aufgelöste Punkte von Objekten zu rekonstruieren, auch wenn keine Bildstücke scharf erfasst worden sind. Dabei wird im einfachsten Fall aus dem mit dem Linsenarray und Flächensensor erfassten Lichtfeld auf eine im Objektraum liegende Ebene punktweise zurückgerechnet.

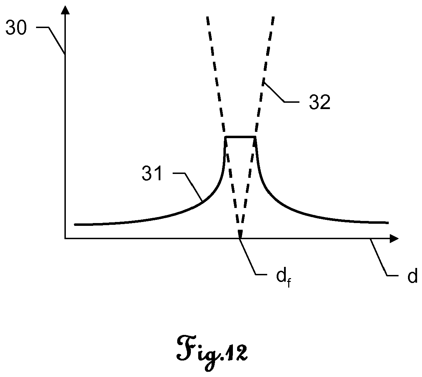

Fig. 12 zeigt eine Darstellung der zu erwartenden, mittels Berechnung aus einem plenoptisch erfassten Datensatz, rekonstruierten Bildunschärfe 30 in Funktion der Objektentfernung d. Die erreichbare Schärfe ist minimal (grosse Unschärfe 30, vgl. durchgezogene Linie 31), falls das Objekt direkt (und insbesondere fokussiert) auf den Linsenarray abgebildet wird, d.h. bei Vorliegen des Objekts in der bzw. um die Fokusdistanz d_{f}. In dieser Konstellation ist die Ortsauflösung durch die Grösse der Miniaturlinsen des Linsenarrays limitiert.

Fig. 12 zeigt zum Vergleich auch die zu erwartende Unschärfe einer Standardkamera mit klassischer Abbildungsoptik (gestrichelte Linie 32). Auffallend ist das inverse Verhalten des Blur-Radius zwischen Standardkamera und plenoptischer Kamera: die klassische Kamera erzeugt gerade dann, wenn das Objekt direkt auf den Flächensensor abgebildet wird (in der Objektentfernung d_{f} vorliegt) grösstmögliche Bildschärfe (also geringste Unschärfe), wohingegen die erreichbare Bildschärfe der plenoptischen Kamera durch die grobe Struktur der Mikrolinsen hierbei limitiert wird. Dieses inverse Verhalten kann mit einer Ausführungsform gemäss Fig. 8 vorteilhaft ausgenutzt werden, wobei der erste Sensor 18 und das Linsenarray 7 derselben Objektdistanz (im Objektraum) zugeordnet sind. In dieser speziellen Konfiguration erzeugt der Flächensensor 18 scharfe Bilder, wo die plenoptische Kamera niedrigste Ortsauflösung aufweist (um die Objektentfernung d_{f}), bei allen anderen Distanzen hingegen zeigt die plenoptische Kamera bessere Wirkung. Diese gegenseitige Ergänzung kann beispielsweise im Hinblick auf die zuverlässige Anzielung des Objekts ausgenutzt werden.

Eine Lichtfeldkamera kann erfindungsgemäss zusätzlich oder alternativ zu einer weiteren Bilderfassungseinheit (z.B. visuelle Kamera oder Teleskop mit Durchsichteinheit) in einem geodätischen Vermessungsgerät vorgesehen sein.

Gemäss einer weiteren erfindungsgemässen Ausführungsform - hier nicht gezeigt - ist eine Bilderfassungseinheit mit einem Mikrolinsenarray und einem Bildsensor zum Erfassen der durch das Array erzeugten Bilder getrennt von der Anzieleinheit angeordnet, beispielsweise an der Stütze einer Totalstation.

Ein Vorteil eines erfindungsgemässen Aufbaus einer Anzieleinheit bzw. eines geodätischen Vermessungsgeräts nach einer Ausführungsform gemäss einer der Figuren 3-8 liegt darin, dass zur Fokussierung auf eine vorgegebene Objektdistanz kein Fokussierglied mechanisch bewegt werden muss, sondern eine entsprechende Berechnung bezüglich der gewünschten Fokusebene basierend auf dem Bilddatensatz ausgeführt werden kann. Eine mechanische Bewegung zur Fokussierung würde immer eine gewisse Zeit benötigen und aufgrund mechanischer Limitationen zu allfälligen Fehlern in der optischen Abbildung führen, welche sich negativ auf die Anzielgenauigkeit auswirken können. Gemäss der Erfindung kann das auf eine vorgegebene Objektdistanz fokussierte Bild aus dem erfassten Bilddatensatz berechnet werden, was deutlich schneller durchführbar ist als ein zeitaufwändiges Versetzen einer Fokussierkomponente.
Darüber hinaus ermöglicht der Aufbau der Bilderfassungseinheit gemäss einer die Erfindung betreffenden gezeigten Figuren (Fig.3-8) die Generierung eines Bildes mit sehr grosser Schärfentiefe, da für jeden dargestellten Bildpunkt der Fokuspunkt entsprechend der Objektdistanz individuell festgelegt und dargestellt werden kann. Die dazu benötigte Tiefeninformation kann - wie oben angeführt - beispielsweise mittels bekannter Triangulationsverfahren aus den aufgenommenen Bilddaten abgeleitet werden.
Bei der Berechnung eines Bildes können Fehler, welche z.B. durch Abbildungsfehler des Hauptobjektivs 2 verursacht werden, berücksichtigt, d.h. korrigiert werden. Eine solche Korrektur der Linsenfehler, z.B. Verzeichnung, kann dabei vorteilhaft in Verbindung mit der Bildberechnung erfolgen. Die Tiefeninformation, die aus dem Bilddatensatz abgeleitet werden kann, kann unter Berücksichtigung der Ausrichtung der Anzieleinheit 11 zum Zeitpunkt der Aufnahme in eine Punktwolke transformiert werden, d.h. dass für jeden Bildpunkt basierend auf der Bilderfassung dreidimensionale Koordinaten bestimmt werden können. Eine Erweiterung des Scanbereichs über das aktuelle Bildfeld hinaus, kann durch ein sukzessives, insbesondere automatisches, Verschwenken des Teleskops in vertikaler und/oder horizontaler Richtung erfolgen. Dies ermöglicht dem Benutzer die dreidimensionale Aufnahme eines Winkelbereichs, der über das Bildfeld des Teleskops hinausgeht.

## Patentansprüche

1. Geodätisches Vermessungsgerät mit
• einer Strahlquelle zur Erzeugung von Messstrahlung zur Entfernungsmessung,
• einer eine Stehachse definierenden Basis,
• einer eine Anzieleinheit (11) tragenden und eine Kippachse definierenden Stütze, wobei
□ die Stütze an der Basis und relativ zur Basis um die Stehachse rotierbar angeordnet ist und
□ die Anzieleinheit (11) relativ zur Stütze um die Kippachse drehbar angeordnet ist,
• einer Winkel- und Entfernungsmessfunktionalität,
• einer Bilderfassungseinheit (15,16) zur Erfassung von Bildern eines Objekts (10,10a,10b) in einem durch die Bilderfassungseinheit definierten Sichtfeld, wobei die Bilderfassungseinheit (16) einen Bildsensor (8,8a) aufweist, und
• einer Steuerungs- und Verarbeitungseinheit,
**dadurch gekennzeichnet, dass**
die Bilderfassungseinheit (16)
• ein Mikrolinsenarray (7,7a,7b) mit einer Vielzahl von zweidimensional definiert angeordneten diffraktiven und/oder refraktiven optischen Elementen (7',7b',7b") aufweist,
wobei die Bilderfassungseinheit dazu ausgebildet ist, im Rahmen eines Entfernungsmessvorgangs
• mittels des Bildsensors jeweilige
□ durch die diffraktiven bzw. refraktiven optischen Elemente (7',7b',7b") erzeugte und
□ zumindest Teile des Objekts (10,10a,10b) repräsentierende Bildstücke zu erfassen und einen die Bildstücke repräsentierenden Bilddatensatz zu erzeugen, und
• ein Bild entsprechend einer aktuell gemessenen Entfernung derart aus dem Bilddatensatz zu erzeugen, dass in der gemessenen Entfernung befindliche Objekte (10a,10b) mit einem ersten Schärfegrad im Bild dargestellt werden und Objekte (10a,10b) in einer anderen Entfernung mit einem geringeren Schärfegrad dargestellt werden.

2. Geodätisches Vermessungsgerät nach Anspruch 1,
**dadurch gekennzeichnet, dass**
das Mikrolinsenarray (7,7a,7b) in fester Position und Ausrichtung relativ zum Bildsensor (8,8a) angeordnet ist und aus dem Bilddatensatz eine jeweilige Strahleintrittsrichtung für auf den Bildsensor (8,8a) auftreffende Lichtstrahlen ableitbar ist.

3. Geodätisches Vermessungsgerät nach Anspruch 1 oder 2,
**dadurch gekennzeichnet, dass**
die diffraktiven bzw. refraktiven optischen Elemente (7',7b',7b") mindestens zwei unterschiedliche Brennweiten aufweisen.

4. Geodätisches Vermessungsgerät nach Anspruch 3,
**dadurch gekennzeichnet, dass**
der Bildsensor (8,8a) und das
Mikrolinsenarray (7,7a,7b) derart angeordnet sind und zusammenwirken, dass durch die Anordnung und die Brennweiten der diffraktiven bzw. refraktiven optischen Elemente (7',7b',7b") die erzeugten Bildstücke jeweils zumindest einen Teil des Sichtfelds repräsentieren und mit einem definierten Versatz auf den Bildsensor (8,8a) projizierbar sind.

5. Geodätisches Vermessungsgerät nach Anspruch 3 oder 4,
**dadurch gekennzeichnet, dass**
die diffraktiven bzw. refraktiven optischen Elemente (7b',7b") des Mikrolinsenarrays (7,7a,7b) einer Anzahl von Gruppen zugeordnet sind, wobei die einer Gruppe zugeordneten optischen
Elemente (7',7b',7b") jeweils gleiche Brennweiten aufweisen und eine erste Gruppe sich hinsichtlich der Brennweite der zugeordneten optischen
Elemente (7',7b',7b") von einer zweiten Gruppe unterscheidet.

6. Geodätisches Vermessungsgerät nach Anspruch 5,
**dadurch gekennzeichnet, dass**
das Mikrolinsenarray (7,7a,7b) derart ausgebildet und angeordnet ist, dass durch die Gruppen von optischen Elementen (7',7b',7b") Bildstücke von Objekten in unterschiedlichen Objektdistanzen auf eine gemeinsame Bildebene (4,4a) projizierbar sind, wobei der Bildsensor (8,8a) zur Erfassung der in der Bildebene (4,4) erzeugten Bildstücke angeordnet ist, insbesondere wobei der Bildsensor (8,8a) in der Bildebene (4,4a) angeordnet ist.

7. Geodätisches Vermessungsgerät nach einem der Ansprüche 1 bis 6,
**dadurch gekennzeichnet, dass**
die Bilderfassungseinheit (16) ein derart angeordnetes Objektiv (2,12,22) aufweist, dass
• einfallendes Licht aus dem Sichtfeld durch das Objektiv (2,22) auf das Mikrolinsenarray (7,7a,7b) projiziert wird oder
• durch das Mikrolinsenarray (7,7a,7b) einfallendes Licht durch das Objektiv (12) auf den Bildsensor (8,8a) projiziert wird.

8. Geodätisches Vermessungsgerät nach einem der Ansprüche 1 bis 7,
**dadurch gekennzeichnet, dass**
der Bildsensor (8a) mehrere zweidimensional angeordnete Teilsensoren (8a) aufweist, wobei die durch das Mikrolinsenarray (7a) erzeugten Bildstücke auf die Teilsensoren (8a) projizierbar sind und der Bilddatensatz mittels der mehreren Teilsensoren (8a) erzeugbar ist.

9. Geodätisches Vermessungsgerät nach einem der Ansprüche 1 bis 8,
**dadurch gekennzeichnet, dass**
die Bilderfassungseinheit (16)
• als Übersichtskamera ausgebildet ist, wobei die Übersichtskamera ein von der Anzieleinheit (11) getrenntes Sichtfeld definiert und getrennt von der Anzieleinheit (11) angeordnet ist, oder
• in der Anzieleinheit (11) angeordnet ist, insbesondere derart angeordnet ist, dass das Sichtfeld der Bilderfassungseinheit (16) im Wesentlichen mit dem Sichtfeld eines Teleskops zur Zielanzielung der Anzieleinheit (11) übereinstimmt.

10. Geodätisches Vermessungsgerät nach einem der Ansprüche 1 bis 9,
**dadurch gekennzeichnet, dass**
die Steuerungs- und Verarbeitungseinheit derart ausgebildet ist, dass ein Verfahren nach einem der Ansprüche 11 bis 14 ausführbar ist.

11. Verfahren zur Bilderfassung mit einem geodätischen Vermessungsgerät aufweisend
• eine Strahlquelle zur Erzeugung von Messstrahlung zur Entfernungsmessung,
• eine eine Stehachse definierende Basis,
• eine eine Anzieleinheit (11) tragende und eine Kippachse definierende Stütze, wobei
□ die Stütze an der Basis und relativ zur Basis um die Stehachse rotierbar angeordnet ist und
□ die Anzieleinheit (11) relativ zur Stütze um die Kippachse drehbar angeordnet ist,
• eine Winkel- und Entfernungsmessfunktionalität, und
• eine Bilderfassungseinheit (15,16) zum Erfassen von Bildern eines Objekts (10,10a,10b) in einem durch die Bilderfassungseinheit (15,16) definierten Sichtfeld, wobei die Bilderfassungseinheit (16) einen Bildsensor (8,8a) aufweist,
**dadurch gekennzeichnet, dass**
das Bilderfassen erfolgt mit zumindest einem
• gemeinsamen Erzeugen einer Vielzahl von das Objekt (10,10a,10b) jeweils zumindest teilweise, insbesondere mehrfach, abbildenden Bildstücken, insbesondere mit zumindest zwei unterschiedlichen Schärfentiefebereichen, insbesondere Schärfeebenen,
• Erfassen der Bildstücke und
• Erzeugen eines die Bildstücke repräsentierenden Bilddatensatzes, und dass
ein Bild entsprechend einer aktuell gemessenen Entfernung derart aus dem Bilddatensatz erzeugt wird, dass in der gemessenen Entfernung befindliche Objekte (10a,10b) mit einem ersten Schärfegrad im Bild dargestellt werden und Objekte (10a,10b) in einer anderen Entfernung mit einem geringeren Schärfegrad dargestellt werden.

12. Verfahren nach Anspruch 11,
**dadurch gekennzeichnet, dass**
aus dem Bilddatensatz eine Abstandsinformation für das Objekt (10,10a,10b) abgeleitet wird, insbesondere mittels Triangulation, insbesondere für jedes Bildstück, insbesondere wobei eine 3D-Punktwolke erzeugt wird.

13. Verfahren nach Anspruch 11 oder 12,
**dadurch gekennzeichnet, dass**
aus dem Bilddatensatz ein Subbilddatensatz abgeleitet wird, welcher ein Subbild mit zumindest einem fokussiert darstellbaren Bildbereich repräsentiert, wobei Bildelemente innerhalb des zumindest einen Bildbereichs im Wesentlichen basierend auf einem einzelnen Bildstück oder einer definierten Anzahl von Bildstücken aus der Vielzahl gemeinsam erzeugter Bildstücke erzeugt sind, insbesondere basierend auf den unterschiedlichen Schärfentiefebereichen für die Bildstücke, insbesondere wobei
• die Bildelemente mit einer gemeinsamen Gegenstandsweite erfasst sind und/oder
• der Bildbereich durch eine Benutzereingabe, insbesondere durch manuelles Auswählen eines Bildpunkts oder grafische Definition eines Bildbereichs, gewählt wird.

14. Verfahren nach einem der Ansprüche 11 bis 13,
**dadurch gekennzeichnet, dass**
• aus dem Bilddatensatz ein Scharfbild mit einer, insbesondere entsprechend der unterschiedlichen Schärfentiefebereiche für die Bildstücke, möglichst grossen Schärfentiefe berechnet wird.

15. Computerprogrammprodukt, das auf einem maschinenlesbaren Träger gespeichert ist,
• zur Steuerung des Erzeugens der Vielzahl von Bildstücken und des Erfassens der Bildstücke,
• zur Ausführung des Erzeugens des die Bildstücke repräsentierenden Bilddatensatzes und
• zur Ausführung des Erzeugens des Bilds entsprechend einer aktuell gemessenen Entfernung aus dem Bilddatensatz eines Verfahrens nach einem der Ansprüche 11 bis 14, insbesondere wenn das Computerprogrammprodukt auf der Steuerungs- und Verarbeitungseinheit eines geodätischen Vermessungsgeräts nach einem der Ansprüche 1 bis 10 ausgeführt wird.

## Claims

1. Geodetic surveying device, comprising
• a beam source for generating measurement radiation for a distance measurement,
• a base defining a vertical axis,
• a support carrying a targeting unit (11) and defining a tilt axis,
□ the support being arranged on the base and rotatable relative to the base about the vertical axis, and
□ the targeting unit (11) being arranged rotatable relative to the support about the tilt axis,
• an angle- and distance-measuring functionality,
• an image acquisition unit (15, 16) for acquiring images of an object (10, 10a, 10b) in a field of view defined by the image acquisition unit, wherein the image acquisition unit (16) comprises an image sensor (8, 8a), and
• a control and processing unit,
**characterized in that**
the image acquisition unit (16) comprises
• a microlens array (7, 7a, 7b) with a multiplicity of diffractive and/or refractive optical elements (7', 7b', 7b") arranged in a defined two-dimensional manner,
wherein the image acquisition unit is configured, within the scope of a distance measurement process,
• for acquiring respective image pieces by means of the image sensor,
□ the respective image pieces being generated by the diffractive and/or refractive optical elements (7', 7b', 7b"), and
□ representing at least parts of the object (10, 10a, 10b) ,
and for generating an image data record representing the image pieces, and
• for generating an image corresponding to a currently measured distance from the image data record in such a way that objects (10a, 10b) situated at the measured distance are depicted in the image with a first degree of sharpness and objects (10a, 10b) at a different distance are depicted with a lower degree of sharpness.

2. Geodetic surveying device according to Claim 1,
**characterized in that**
the microlens array (7, 7a, 7b) is arranged with a fixed position and alignment relative to the image sensor (8, 8a) and a respective beam entry direction for light beams incident on the image sensor (8, 8a) can be derived from the image data record.

3. Geodetic surveying device according to Claim 1 or 2,
**characterized in that**
the diffractive and/or refractive optical elements (7', 7b', 7b") have at least two different focal lengths.

4. Geodetic surveying device according to Claim 3,
**characterized in that**
the image sensor (8, 8a) and the microlens array (7, 7a, 7b) are arranged and interact in such a way that, as a result of the arrangement and the focal lengths of the diffractive and/or refractive optical elements (7', 7b', 7b"), the generated image pieces in each case represent at least part of the field of view and can be projected with a defined offset onto the image sensor (8, 8a).

5. Geodetic surveying device according to Claim 3 or 4,
**characterized in that**
the diffractive and/or refractive optical elements (7b', 7b") of the microlens array (7, 7a, 7b) are assigned to a number of groups, with the optical elements (7', 7b', 7b") assigned to a group in each case having the same focal length and a first group differing from a second group in terms of the focal length of the assigned optical elements (7', 7b', 7b").

6. Geodetic surveying device according to Claim 5,
**characterized in that**
the microlens array (7, 7a, 7b) is embodied and arranged in such a way that image pieces of objects at different object distances can be projected onto a common image plane (4, 4a) by the groups of optical elements (7', 7b', 7b"), the image sensor (8, 8a) being arranged for acquiring the image pieces generated in the image plane (4, 4), the image sensor (8, 8a) in particular being arranged in the image plane (4, 4a).

7. Geodetic surveying device according to any one of Claims 1 to 6,
**characterized in that**
the image acquisition unit (16) comprises an objective lens (2, 12, 22) arranged in such a way that
• incident light from the field of view is projected onto the microlens array (7, 7a, 7b) by the objective lens (2, 22) or
• light incident through the microlens array (7, 7a, 7b) is projected onto the image sensor (8, 8a) by the objective lens (12).

8. Geodetic surveying device according to any one of Claims 1 to 7,
**characterized in that**
the image sensor (8a) comprises a plurality of sub-sensors (8a) arranged in two dimensions, with the image pieces generated by the microlens array (7a) being projectable onto the sub-sensors (8a) and it being possible to generate the image data record by means of the plurality of sub-sensors (8a).

9. Geodetic surveying device according to any one of Claims 1 to 8,
**characterized in that**
the image acquisition unit (16) is
• embodied as an overview camera, the overview camera defining a field of view separate from the targeting unit (11) and being arranged separately from the targeting unit (11), or
• arranged in the targeting unit (11), in particular arranged in such a way that the field of view of the image acquisition unit (16) substantially corresponds to the field of view of a telescopic sight for targeting the target of the targeting unit (11).

10. Geodetic surveying device according to any one of Claims 1 to 9,
**characterized in that**
the control and processing unit is embodied in such a way that a method according to any one of Claims 11 to 14 can be carried out.

11. Method for image acquisition using a geodetic surveying device comprising
• a beam source for generating measurement radiation for measuring the distance,
• a base defining a vertical axis,
• a support carrying a targeting unit (11) and defining a tilt axis,
∘ the support being arranged on the base and rotatable relative to the base about the vertical axis, and
c the targeting unit (11) being arranged rotatable relative to the support about the tilt axis,
• an angle- and distance-measuring functionality, and
• an image acquisition unit (15, 16) for acquiring images of an object (10, 10a, 10b) in a field of view defined by the image acquisition unit (15, 16), wherein the image acquisition unit (16) comprises an image sensor (8, 8a),
**characterized in that**
the image acquisition takes place, at least with
• a common generation of a multiplicity of image pieces, respectively imaging the object (10, 10a, 10b) at least in part, in particular a number of times, in particular with at least two different depth of field ranges, in particular focal planes,
• an acquisition of the image pieces and
• a generation of an image data record representing the image pieces, and that
• an image corresponding to a currently measured distance is generated from the image data record in such a way that objects (10a, 10b) situated at the measured distance are depicted in the image with a first degree of sharpness and objects (10a, 10b) at a different distance are depicted with a lower degree of sharpness.

12. Method according to Claim 11,
**characterized in that**
distance information for the object (10, 10a, 10b) is derived from the image data record, in particular by means of triangulation, in particular for each image piece, in particular with a 3D point cloud being generated.

13. Method according to Claim 11 or 12,
**characterized in that**
a sub-image data record is derived from the image data record, the former representing a sub-image with at least one image region which can be depicted in focus, with image elements within the at least one image region being generated substantially on the basis of a single image piece or a defined number of image pieces from the multiplicity of image pieces generated together, in particular on the basis of the different depth of field ranges for the image pieces, in particular with
• the image elements being acquired with a common object distance and/or
• the image region being selected by a user input, in particular by manual selection of an image point or graphic definition of an image region.

14. Method according to any one of Claims 11 to 13,
**characterized in that**
• an in-focus image with a depth of field which is as large as possible, in particular corresponding to the different depth of field ranges for the image pieces, is calculated from the image data record.

15. Computer program product, stored on a machine-readable medium,
• for controlling the generation of the multiplicity of image pieces and the acquisition of the image pieces,
• for executing the generation of the image data record, representing the image pieces, and
• for executing the generation of the image corresponding to a currently measured distance from the image data record,
of a method according to any one of Claims 11 to 14, in particular if the computer program product is executed on the control and processing unit of a geodetic surveying device according to any one of Claims 1 to 10.

## Revendications

1. Appareil de mesure géodésique comportant :
• une source de rayonnement destinée à créer un rayonnement de mesure afin de mesurer des distances,
• une base définissant un axe vertical,
• un support portant une unité de visée (11) et définissant un axe de basculement, dans lequel
∘ le support est disposé sur la base de manière à pouvoir tourner sur l'axe vertical par rapport à la base et
∘ l'unité de visée (11) est disposée de manière à pouvoir tourner sur l'axe de basculement par rapport au support,
• une fonctionnalité de mesure d'angle et de distance,
• une unité d'acquisition d'images (15, 16) destinée à acquérir des images d'un objet (10, 10a, 10b) situé dans un champ de vision défini par l'unité d'acquisition d'images, l'unité d'acquisition d'images (16) présentant un capteur d'image (8, 8a), et
• une unité de commande et de traitement,
**caractérisé en ce que**
l'unité d'acquisition d'images (16)
• présente une matrice de microlentilles (7, 7a, 7b) comportant une pluralité d'éléments optiques diffractifs et/ou réfractifs (7', 7b', 7b") disposés en deux dimensions,
l'unité d'acquisition d'images étant conçue, dans le cadre d'un processus de mesure de distance,
• pour acquérir, au moyen dudit capteur d'image, des portions d'image respectives qui
∘ sont créées par les éléments optiques diffractifs ou réfractifs (7', 7b', 7b") et
∘ représentent au moins des parties de l'objet (10, 10a, 10b),
et obtenir un jeu de données d'image représentant lesdites portions d'image, et
• pour créer, à partir dudit jeu de données d'image, une image correspondant à une distance instantanée mesurée, de manière à représenter à l'image des objets (10a, 10b) situés à la distance mesurée avec un premier degré de netteté et à représenter des objets (10a, 10b) situés à une autre distance avec un degré de netteté inférieur.

2. Appareil de mesure géodésique selon la revendication 1,
**caractérisé en ce que**
la matrice de microlentilles (7, 7a, 7b) est disposée à une position et dans une orientation fixes par rapport au capteur d'image (8, 8a) et il est possible de déduire du jeu de données d'image la direction d'entrée d'un faisceau donné parmi les faisceaux lumineux atteignent le capteur d'image (8, 8a).

3. Appareil de mesure géodésique selon la revendication 1 ou 2,
**caractérisé en ce que**
les éléments optiques diffractifs ou réfractifs (7', 7b', 7b") présentent au moins deux distances focales différentes.

4. Appareil de mesure géodésique selon la revendication 3,
**caractérisé en ce que**
le capteur d'image (8, 8a) et la matrice de microlentilles (7, 7a, 7b) sont disposés et interagissent de manière que, par la disposition et les distances focales des éléments optiques diffractifs ou réfractifs (7', 7b', 7b"), les portions d'image créées représentent chacune au moins une partie du champ de vision et peuvent être projetées sur le capteur d'image (8, 8a) avec un décalage défini.

5. Appareil de mesure géodésique selon la revendication 3 ou 4,
**caractérisé en ce que**
les éléments optiques diffractifs ou réfractifs (7b', 7b") de la matrice de microlentilles (7, 7a, 7b) sont affectés à un certain nombre de groupes, les éléments optiques (7', 7b', 7b") affectés à un même groupe présentant tous la même distance focale, et un premier groupe se distinguant d'un deuxième groupe par la distance focale des éléments optiques (7', 7b', 7b") qui lui sont affectés.

6. Appareil de mesure géodésique selon la revendication 5,
**caractérisé en ce que**
la matrice de microlentilles (7, 7a, 7b) est conçue et disposée de manière que des portions d'image d'objets situés à différentes distances puissent être projetées sur un plan d'image (4, 4a) commun par les groupes d'éléments optiques (7', 7b', 7b"), le capteur d'image (8, 8a) étant disposé pour acquérir les portions d'image créées dans le plan d'image (4, 4a), le capteur d'image (8, 8a) étant notamment disposé dans le plan d'image (4, 4a).

7. Appareil de mesure géodésique selon l'une des revendications 1 à 6,
**caractérisé en ce que**
l'unité d'acquisition d'images (16) présente un objectif (2, 12, 22) disposé de manière que
• la lumière incidente provenant du champ de vision est projetée sur la matrice de microlentilles (7, 7a, 7b) au travers de l'objectif (2, 22) ou
• la lumière incidente traversant la matrice de microlentilles (7, 7a, 7b) est projetée sur le capteur d'image (8, 8a) au travers de l'objectif (12).

8. Appareil de mesure géodésique selon l'une des revendications 1 à 7,
**caractérisé en ce que**
le capteur d'image (8a) présente plusieurs capteurs partiels (8a) disposés en deux dimensions, les portions d'image créées au travers de la matrice de microlentilles (7a) pouvant être projetées sur les capteurs partiels (8a), et le jeu de données d'image pouvant être obtenu au moyen des plusieurs capteurs partiels (8a).

9. Appareil de mesure géodésique selon l'une des revendications 1 à 8,
**caractérisé en ce que**
l'unité d'acquisition d'images (16)
• consiste en une caméra de vue d'ensemble définissant un champ de vision distinct de celui de l'unité de visée (11) et disposée séparément de l'unité de visée (11), ou
• est disposée dans l'unité de visée (11), notamment de manière à faire essentiellement coïncider le champ de vision de l'unité d'acquisition d'images (16) avec le champ de vision d'un télescope destiné à aligner l'unité de visée (11) sur la cible.

10. Appareil de mesure géodésique selon l'une des revendications 1 à 9,
**caractérisé en ce que**
l'unité de commande et de traitement est conçue de manière à permettre l'exécution d'un procédé selon l'une des revendications 11 à 14.

11. Procédé d'acquisition d'image au moyen d'un appareil de mesure géodésique présentant
• une source de rayonnement destinée à créer un rayonnement de mesure afin de mesurer des distances,
• une base définissant un axe vertical,
• un support portant une unité de visée (11) et définissant un axe de basculement, dans lequel
∘ le support est disposé sur la base de manière à pouvoir tourner sur l'axe vertical par rapport à la base et
∘ l'unité de visée (11) est disposée de manière à pouvoir tourner sur l'axe de basculement par rapport au support,
• une fonctionnalité de mesure d'angle et de distance, et
• une unité d'acquisition d'images (15, 16) destinée à acquérir des images d'un objet (10, 10a, 10b) situé dans un champ de vision défini par l'unité d'acquisition d'images (15, 16), l'unité d'acquisition d'images (16) présentant un capteur d'image (8, 8a),
**caractérisé en ce que**
l'acquisition d'image s'effectue par le biais d'au moins une des étapes suivantes :
• création commune d'une pluralité de portions d'image représentant chacune l'objet (10, 10a, 10b) de manière au moins partielle, notamment plusieurs fois, notamment avec au moins deux domaines différents de profondeur de champ, notamment au moins deux plans de netteté différents,
• acquisition des portions d'image et
• obtention d'un jeu de données d'image représentant les portions d'image, et **en ce que**
il est créé, à partir dudit jeu de données d'image, une image correspondant à une distance instantanée mesurée, de manière à représenter à l'image des objets (10a, 10b) situés à la distance mesurée avec un premier degré de netteté et à représenter des objets (10a, 10b) situés à une autre distance avec un degré de netteté inférieur.

12. Procédé selon la revendication 11,
**caractérisé en ce que**
à partir du jeu de données d'image, il est déduit une information de distance concernant l'objet (10, 10a, 10b), notamment au moyen d'une triangulation, notamment pour chaque portion d'image, notamment avec création d'un nuage de points 3D.

13. Procédé selon la revendication 11 ou 12,
**caractérisé en ce que**
à partir du jeu de données d'image, il est déduit un jeu de données de sous-image qui représente une sous-image qui comporte au moins un domaine d'image pouvant être représenté de manière focalisée, des éléments d'image compris dans l'au moins un domaine d'image étant créés essentiellement à partir d'une unique portion d'image ou d'un nombre défini de portions d'image parmi la pluralité de portions d'image créées en commun, notamment à partir des différents domaines de profondeur de champ des portions d'image, avec notamment
• une acquisition des éléments d'image liés à une même distance d'objet et/ou
• un choix du domaine d'image par le biais d'une entrée utilisateur, notamment par le biais d'une sélection manuelle d'un point de l'image ou par la définition graphique d'un domaine d'image.

14. Procédé selon l'une des revendications 11 à 13,
**caractérisé en ce que**
• à partir du jeu de données d'image, il est calculé une image nette avec une profondeur de champ aussi grande que possible, notamment correspondant aux différents domaines de profondeur de champ des portions d'image.

15. Produit programme d'ordinateur enregistré sur un support lisible par une machine,
• destiné à commander la création de la pluralité de portions d'image et l'acquisition des portions d'image,
• destiné à exécuter l'obtention du jeu de données d'image représentant les portions d'image et
• destiné à exécuter la création de l'image correspondant à une distance instantanée mesurée à partir du jeu de données d'image
suivant un procédé selon l'une des revendications 11 à 14, notamment lorsque le produit programme d'ordinateur est exécuté par l'unité de commande et de traitement d'un appareil de mesure géodésique selon l'une des revendications 1 à 10.
